Europäisches Patentamt

European Patent Office

Office européen des brevets

(19)

(11) **EP 1 357 091 A1**

(12) **EUROPEAN PATENT APPLICATION**
published in accordance with Art. 158(3) EPC

(43) Date of publication:
29.10.2003 Bulletin 2003/44

(51) Int Cl.⁷: **C03C 3/21**, C03C 3/19

(21) Application number: 01943871.2

(86) International application number:
**PCT/JP01/05627**

(22) Date of filing: 29.06.2001

(87) International publication number:
**WO 02/002470 (10.01.2002 Gazette 2002/02)**

(84) Designated Contracting States:
**AT BE CH CY DE DK ES FI FR GB GR IE IT LI LU MC NL PT SE TR**

(30) Priority: 30.06.2000 JP 2000198035
04.08.2000 JP 2000237358
26.09.2000 JP 2000291539

(71) Applicant: **HOYA CORPORATION**
**Shinjuku-ku, Tokyo 161-8525 (JP)**

(72) Inventors:
• **TAWARAYAMA, Hiromasa**
**Fussa-shi, Tokyo 197-0013 (JP)**

• **HAYASHI, Kazutaka**
**Akishima-shi, Tokyo 196-0025 (JP)**
• **ZOU, Xuelu**
**Akishima-shi, Tokyo 196-0012 (JP)**
• **KAWAZOE, Hiroshi**
**Yokohama-shi, Kanagawa 247-0014 (JP)**

(74) Representative: **Leidescher, Thomas, Dr. et al**
**Zimmermann & Partner,**
**Postfach 330 920**
**80069 München (DE)**

(54) **OPTICAL GLASS AND OPTICAL PRODUCT USING THE SAME**

(57) Provided is an optical glass having a high refractive index and high dispersion characteristics applicable to mass production of precision press molded products, mainly having optical constants of a refractive index nd in the range of 1.7 to 2.0 and an Abbe number ν d in the range of 20 to 32, and an optical part and a precision press molding material. An optical glass comprising as glass components, as molar percents, 12-34 percent of $P_2O_5$; 0.2-15 percent of $B_2O_3$ (where the total quantity of $P_2O_5$ and $B_2O_3$ is 15-35 percent); 0-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-25 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where the total quantity of $Li_2O$, $Na_2O$, and $K_2O$ is 10-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent. An optical part or precision press molding material comprised of this optical glass.

Fig. 1

**Description**

**Field of the Invention**

The present invention relates to optical glass having a high refractive index and high dispersion characteristics that is suited to application to precision press molding to precisely mold the shape of final products for objectives not requiring grinding or polishing; optical parts comprised of this glass; press molding materials comprised of this glass; methods of manufacturing the same; and methods of manufacturing molded glass products employing these materials.

Specifically, the present invention relates to optical glass for precision press molding, glass preforms employing the same, and optical parts. More specifically, the present invention relates to optical glass for precision press molding in the manufacturing of ultraprecision aspherical lenses and the like that does not contain PbO, does not require grinding or polishing following precision press molding, permits precision press molding at low temperatures of 640°C and below, and has a high refractive index, high dispersion, and a low glass transition temperature; as well as glass preforms and optical parts employing this optical glass.

**Related Art**

The technique of manufacturing optical parts such as aspherical lenses comprised of optical glass of high refractive index and high dispersion by precision press molding is an effective technique of manufacturing extremely important optical parts with good production properties in view of optical design. Thus, a number of patent applications have been filed and published relating to inventions in the field of optical glass that can be applied to this technique. However, the glass described in these patent unexamined publications involves low press temperatures to increase the service life of the mold used in precision press molding, and the incorporation of a large quantity of lead oxide in the optical glass composition.

For example, Japanese Patent Unexamined Publication No. Hei 1-308843 discloses optical glass for precision presses containing 30-58 weight percent of PbO and Japanese Patent Unexamined Publication No. Hei 7-247135 discloses low-melting-point optical glass comprising 25-54 weight percent of PbO.

Japanese Patent Unexamined Publication No. Hei 1-308843 discloses optical glass for precision presses comprised of, by weight, 15-50 percent of $SiO_2$; 30-58 percent of PbO; 0.1-7 percent of $Li_2O$, 0-15 percent of $Na_2O$, 0-15 percent of $K_2O$, where $Li_2O+Na_2O+K_2O$ comprise 3-25 percent; 0-15 percent of $La_2O_3$, 0-10 percent of MgO, 0-10 percent of $TiO_2$, where $La_2O_3+MgO+TiO_2$ comprise 0.1-20 percent; 0-5 percent of $ZrO_2$, 0-10 percent of $Al_2O_3$, where $ZrO_2+Al_2O_3$ comprise 0.1-10 percent; 0-20 percent of ZnO; 0-15 percent of $B_2O_3$, 0-5 percent of $Y_2O_3$, 0-5 percent of $Gd_2O_3$, 0-10 percent of CaO, 0-10 percent of SrO, 0-9 percent of BaO, 0-15 percent of $Nb_2O_5$, 0-5 percent of $Ta_2O_5$, 0-5 percent of $WO_3$, 0-5 percent of $P_2O_5$, 0-1 percent of $As_2O_3$, and 0-5 percent of $Sb_2O_3$. Further, Japanese Patent Unexamined Publication No. Hei 7-247135 discloses low-melting-point optical glass comprising, by weight, 10-35 percent of $P_2O_5$, 25-54 percent of PbO, 0-5 percent of $Li_2O$, 0-18 percent of $Na_2O$, 0-14 percent of $K_2O$, where $Li_2O+Na_2O+K_2O$ comprise 1-20 percent, 0-22 percent of $Nb_2O_5$, and 0-28 percent of $WO_3$, where $Nb_2O_5+WO_3$ comprise 5-35 percent.

However, precision press molding is ordinarily conducted in a nonreactive atmosphere or a weakly reducing atmosphere to prevent mold oxidation. When the glasses of the above-described compositions containing large amounts of lead oxide are precision pressed, lead oxide is reduced on the glass surface and precipitates onto the glass surface as metallic lead. Further, with repeated press molding, the precipitating metallic lead adheres to the molding surface of the mold, decreasing the precision of the molding surface and eventually causing loss of the surface precision of the transfer surface of the molded product. Thus, maintenance is required to remove the metallic lead adhering to the mold, compromising mass production. Further, metallic lead precipitates onto the surface of the molded optical product causing clouding, thus causing molded products to be rejected as defective. Further, the environmental pollution caused by melting of the above-described optical glass containing large amounts of lead oxide is also highly problematic. Accordingly, the glasses disclosed in Japanese Patent Unexamined Publication Nos. Hei 1-308843 and Hei 7-274135 are not suitable for use as precision press glass.

Among the optical glasses currently available on the market, there are lightened high refractive index high dispersion glasses that do not contain lead oxide (Japanese Patent Unexamined Publication No. Sho 62-3103). However, since these glasses have relatively high precision press forming temperatures of about 650°C or more, they lead to marked deterioration of the mold materials employed in precision press molding when used in precision press molding, making mass production extremely difficult. Further, since the glasses themselves are unstable, there is a problem in that crystals in the glass that is pressed during precision pressing tends to precipitate so that even when a mold material capable of withstanding high temperatures is employed, extremely low yields are obtained in precision press molding. In this manner, the higher the temperature employed in precision press molding, the greater the problems in the form of oxidation and deterioration of the mold material, the more difficult it is to maintain surface precision, and the more difficult the mass production of optical parts becomes by precision press molding. Accordingly, there is a need to reduce to the extent possible the transition temperature and yield point temperature of the high refractive index, high dispersion optical glass employed in precision press molding.

Such a glass is described in Japanese Patent Unexamined Publication No. Hei 5-51233 to achieve reduction in press molding temperatures. This glass is comprised of, by weight, $SiO_2$: 10-20 percent, $GeO_2$: 3-15 percent, and $B_2O_3$: 0-7 percent, with the total quantity of $SiO_2$, $GeO_2$, and $B_2O_3$ being 20-27 percent; $TiO_2$: 19-29 percent, $Nb_2O_5$: 17-29 percent, and BaO: 0-7 percent, with the total quantity of $Nb_2O_5$, $TiO_2$, and BaO being 44-54 percent; $Li_2O$: 0-3 percent, $Na_2O$: 7-18 percent, $K_2O$: 0-22 percent, and $Cs_2O$: 0-20 percent, with the total quantity of $Li_2O$, $Na_2O$, $K_2O$, and $Cs_2O$ being 24-33 percent. The yield point temperature of this glass is not more than 550°C, its refractive index not less than 1.76, and its Abbé number is not more than 26.5, making it a highly refractive index, high dispersion optical glass. However, although this glass achieves the objective of temperature reduction, there is a problem in the form of coloration of the glass due to its high $TiO_2$ content, and there are also problems with the melting properties and stability of the glass during mass production. Since $GeO_2$, an essential component, is very expensive, this glass does not afford cost reduction of optical parts. The glass described in Japanese Patent Unexamined Publication No. Hei 5-51233 has a high liquid phase temperature and a strong tendency to lose transparency near its melting point, thus making it difficult to manufacture glass preforms for precision pressing and rendering this glass unsuitable for precision pressing.

Japanese Patent Unexamined Publication No. Hei 7-97234 discloses an invention having for its object to provide an optical glass having both a high refractive index and high dispersion characteristics, which can be softened and press-molded without losing transparency at low temperature and has a low liquid phase temperature and good stability. The glasses described in the above-cited publication comprise a low-melting-point optical glass characterized by comprising by weight 2-29 percent of $P_2O_5$, 2-25 percent of $Na_2O$, not less than 4 and less than 22 percent of $Nb_2O_5$, and 20-52 percent of $WO_3$, and a low-melting-point optical glass characterized by comprising by weight 12-32 percent of $P_2O_5$, 0.5-16 percent of $B_2O_3$, 0.3-6 percent of $Li_2O$, 2-22 percent of $Na_2O$, and 8-52 percent of $Nb_2O_5$.

These optical glasses do have both high refractive indexes and high dispersion characteristics, can be softened and press-molded without losing transparency at low temperatures, and do have low liquid phase temperatures and good stability. However, these glasses have problems in that they contain large quantities of $Nb_2O_5$ and $WO_3$, causing coloration of the glass. Further, digital cameras, videos, and the like have grown smaller in recent years, and there is a strong demand to further simplify optical systems. In response, there is a strong need to mass produce optical glass having even higher refractive indexes and higher dispersion characteristics than in the past; the above-described optical glasses have refractive indexes and dispersion characteristics that are still inadequate.

Ordinary press molding is conducted at a high temperature range of about 20-60°C above the yield point temperature of the glass. When the yield point temperature of the glass exceeds 600°C, the press temperature becomes 620°C or greater. Thus, OH adhering to the surface of the glass reacts with the mold material and ends up decomposing. This decomposition reaction leaves numerous bubbles on the surface of glass lenses that are formed by press molding. Thus, not only does it become difficult to maintain the degree of precision of the transfer surface of the optical part being precision molded, damage is done to the surface of the mold material, compromising mass production.

On the basis of such problems, it is an object of the present invention to provide: an optical glass for precision press molding that does not contain PbO, that has a high refractive index, high dispersion characteristics, and a low glass transition temperature, and that permits precision press molding at low temperatures of 640°C and below for the manufacturing of ultraprecise aspherical lenses and the like that do not require grinding or polishing after precision press molding; and glass preforms and optical parts employing this optical glass.

A further object of the present invention is to provide optical glass having a high refractive index and high dispersion characteristics permitting application to the mass production of precision press molded products, optical constants principally in the form of a refractive index nd of 1.7-2.0 and an Abbé number ν d of 20-32; and optical products and precision press molded materials comprised of this optical glass. A still further object of the present invention is to provide a method of manufacturing precision press molded materials comprised of the above-described optical glass and a method of manufacturing precision press molded products.

The present inventors conducted extensive research into achieving the above-stated objects, resulting in the discovery that these objects can be achieved by means of optical glass having a prescribed refractive index [nd], Abbé number [ν d], and viscosity at the liquid phase temperature; optical glass having a prescribed refractive index [nd], Abbé number [ν d], and glass transition temperature [Tg]; and optical glass having a prescribed composition. The present invention was devised on that basis.

## Summary of the Invention

Further, the present inventors conducted researches on the basis of several experiments to achieve the above-cited objects, resulting in the discovery that in order to render a glass to have high refractive index characteristics of the refractive index [nd] of 1.7 or greater and high dispersion characteristics of the Abbé number [ν d] of 32 or less, it is preferable to keep a number density of oxygen atom into glass structure at constant range as well as to reduce the number of cross-linking oxygen ions therein as small as possible. Based on this discovery, the total content of former, $P_2O_5$ and $B_2O_3$ can be reduced 35 molar percent or less by introducing relative high amount of $WO_3$ into a glass containing $P_2O_5$ and $B_2O_3$ as a former. As a result, $P_2O_5$-$B_2O_3$-$WO_3$ alkali metal oxide glass with low number of cross-linking oxygen ions was newly developed as an optical glass satisfying the above demands and exhibiting excellent stability and mass-productivity, thereby achieving the present invention.

That is, the present invention provides:

(1) An optical glass (referred to hereinafter as optical glass (1)), characterized by exhibiting a refractive index in the range of 1.75 to 2.0, an Abbé number [ν d] in the range of 20 to 28.5, and a viscosity at the liquid phase temperature equal to or higher than 0.4 Pa • s.

(2) An optical glass (referred to hereinafter as optical glass (2)), characterized by exhibiting a refractive index in the range of 1.75 to 2.0, an Abbé number [ν d] in the range of 20 to 28.5, and a glass transition temperature equal to or less than 540°C.

(3) An optical glass (referred to hereinafter as optical glass (3)), characterized by exhibiting a refractive index in the range of 1.75 to 2.0, an Abbé number [ν d] in the range of 20 to 28.5, and a transmittance λ 80 equal to or less than 500nm and a transmittance λ 5 equal to or less than 385nm.

(4) The optical glass of any of (1)-(3) comprising, as molar percents, 12-34 percent of $P_2O_5$; 0.2-15 percent of $B_2O_3$; 0-25 percent of $Nb_2O_5$; 0-40 percent of $WO_3$; 4-45 percent of at least one $R'_2O$ selected from among $Li_2O$, $Na_2O$, and $K_2O$; and 0-30 percent (excluding 30 percent) of at least one RO selected from among BaO, ZnO, and SrO; with the total content of the above-stated components being equal to or more than 94 percent.

(5) The optical glass of any of (1)-(3), characterize by comprising as glass components, as molar percents, 12-34 percent of $P_2O_5$; 0.2-15 percent of $B_2O_3$ (where the total quantity of $P_2O_5$ and $B_2O_3$ is 15-35 percent); 0-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-25 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where the total quantity of $Li_2O$, $Na_2O$, and $K_2O$ is 10-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent.

(6) An optical glass of any of (1)-(5) comprising, as molar percents, 15-30 percent of $P_2O_5$; 0.5-15 percent of $B_2O_3$; 5-25 percent of $Nb_2O_5$; 6-40 percent of $WO_3$; 4-45 percent of at least one $R'_2O$ selected from among $Li_2O$, $Na_2O$, and $K_2O$; and 0-30 molar percent (excluding 30 molar percent) of at least one RO selected from among BaO, ZnO, and SrO; with the total content of the above-stated components being equal to or more than 95 percent.

(7) An optical glass (referred to hereinafter as optical glass (4)), characterized by comprising, as molar percents, 15-30 percent of $P_2O_5$; 0.5-15 percent of $B_2O_3$; 5-25 percent of $Nb_2O_5$; 6-40 percent of $WO_3$; 4-45 percent of at least one $R'_2O$ selected from among $Li_2O$, $Na_2O$, and $K_2O$; and 0-30 molar percent (excluding 30 molar percent) of at least one RO selected from among BaO, ZnO, and SrO; with the total content of the above-stated components being equal to or more than 95 percent.

(8) The optical glass of (6) or (7) comprising 0-25 molar percent (excluding 0 molar percent) of BaO.

(9) An optical glass (referred to hereinafter as optical glass (5)), characterize by comprising, as molar percents, 15-30 percent of $P_2O_5$; 0.5-15 percent of $B_2O_3$; 5-25 percent of $Nb_2O_5$; 6-40 percent of $WO_3$; not more than 10 percent of $TiO_2$; 4-45 percent of at least one $R'_2O$ selected from among $Li_2O$, $Na_2O$, and $K_2O$; and 0-30 percent (excluding 30 percent) of at least one RO selected from among BaO, ZnO, and SrO.

(10) An optical glass (referred to hereinafter as optical glass (6)), characterized by comprising as glass components, as molar percents, 12-34 percent of $P_2O_5$; 0.2-15 percent of $B_2O_3$ (where the total quantity of $P_2O_5$ and $B_2O_3$ is 15-35 percent); 0-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-25 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where the total quantity of $Li_2O$, $Na_2O$, and $K_2O$ is 10-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent; a density of oxygen atoms contained is in the range of $4.2 \times 10^{22}$ to $5.2 \times 10^{22}/cm^3$.

(11) An optical glass (referred to hereinafter as optical glass (7)), characterized by comprising as glass components, as molar percents, 12-34 percent of $P_2O_5$; 0.2-15 percent of $B_2O_3$ (where the total quantity of $P_2O_5$ and $B_2O_3$ is 15-35 percent); 2-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-25 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where

the total quantity of $Li_2O$, $Na_2O$, and $K_2O$ is 29-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent.

(12) An optical glass (referred to hereinafter as optical glass (8)), characterized by comprising as glass components, as molar percents, 12-34 percent of $P_2O_5$; 0.2-15 percent of $B_2O_3$ (where the total quantity of $P_2O_5$ and $B_2O_3$ is 15-35 percent); 2-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-11 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where the total quantity of $Li_2O$, $Na_2O$, and $K_2O$ is 10-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent.

(13) The optical glass of any of (10)-(12), characterized by having a composition comprising, as essential components, $P_2O_5$, $B_2O_3$, $WO_3$, $Nb_2O_5$, $TiO_2$, BaO, ZnO, $Li_2O$, $Na_2O$ and $K_2O$ or the composition comprising the above essential components and $Sb_2O_3$.

(14) The optical glass of (10) or (11) comprising 0-11 percent of BaO.

(15) The optical glass of (10) or (12) wherein the total quantity of $Li_2O$, $Na_2O$, and $K_2O$ is equal to or more than 29 percent.

(16) The optical glass of any of (10) to (15), characterized by having a density of oxygen atoms contained in the range of from $4.2 \times 10^{22}$ to $5.2 \times 10^{22}/cm^3$.

(17) An optical glass (referred to hereinafter as optical glass (9)), characterized by comprising $P_2O_5$, $B_2O_3$, $WO_3$ and an alkali metal oxide, wherein the total quantity of $P_2O_5$ and $B_2O_3$ is 15-35 molar percent and a content of $WO_3$ is 2-45 molar percent and a density of oxygen atoms contained ranges from $4.2 \times 10^{22}$ to $5.2 \times 10^{22}/cm^3$.

(18) The optical glass of (17) comprising 2-30 molar percent of $Li_2O$.

(19) The optical glass of any of (10)-(18) not substantially comprising $GeO_2$.

(20) The optical glass of any of (10)-(19), characterized by exhibiting a glass transition temperature equal to or less than 530°C and/or a yield point temperature equal to or less than 580°C.

(21) The optical glass of (10)-(20), characterized by exhibiting a refractive index in the range of 1.7 to 2.0, an Abbé number ν d in the range of 20 to 32.

(22) The optical glass of any of (10)-(20), characterized by exhibiting a liquid phase temperature equal to or less than 970°C.

(23) An optical part composed of the optical glass of any of (1)-(22).

(24) A glass preform composed of the optical glass of any of (1)-(22).

(25) A method of manufacturing glass performs, characterized in that a prescribed weight of molten glass flowing out of a flowout pipe is received in a mold to prepare a glass preform made of the optical glass of any of (1)-(22).

(26) A method of manufacturing glass preforms using the optical glass of any of (1)-(22), characterized in that:

a molten glass glob is made to fall by causing molten glass flowing out of a flowout pipe to drip naturally or by cutting with a cutting blade;
the molten glass glob is received in a depression in a forming mold, and in the process, air, an inert gas or some other gas is blown out through minute holes opening at the depressions; and,
a layer of air is generated between the molten glass glob and the inner surface of depression in the forming mold and the molten glass glob is maintained and cooled within the depression in a state of substantial non-contact with the inner surface of the depression until at least a portion of the outer surface of the molten glass glob reaches a temperature not greater than the melting temperature.

(27) A method of manufacturing glass molding products, characterized in that the glass molding products are formed by heating and precision press-molding the precision press-molding material of (24) or the glass preform manufactured by the manufacturing method of (25).

## Brief Description of the Figures

Fig. 1 is a schematic drawing of the press device for precision press molding of the glass preform comprised of the optical glass of the present invention.
Fig. 2 is a spectro-transmittance curve of an optical glass of Example78.

### Modes for carrying out the Present Invention

The optical glass of the present invention comprises the nine forms of optical glasses (1)-(9); each of these optical glasses will be described.

Optical glass (1) has a refractive index [nd] of 1.75-2.0, an Abbé number [ν d] of 20-28.5, and a viscosity at the liquid phase temperature of not less than 0.4 Pa • s. In optical glass (1), the glass transition temperature [Tg] is normally not greater than 540°C, but can also be made 520°C or less, 510°C or less, or 490°C or less. Further, the yield point temperature [Ts] of the glass is normally not greater than 580°C, but can also be made 570°C or less, 560°C or less, or 550°C or less.

Optical glass (2) has a refractive index [nd] of 1.75-2.0, an Abbé number [ν d] of 20-28.5, and a glass transition temperature [Tg] of not more than 540°C. In optical glass (2), the glass transition temperature [Tg] is not greater than 540°C, but can be made 520°C or less, 510°C or less, or 490°C or less. The glass yield point temperature [Ts] is normally not greater than 580°C, but can be made 570°C or less, 560°C or less, or 550°C or less. The viscosity at the liquid phase temperature is normally not less than 0.4 Pa • s.

Optical glass (3) has a refractive index [nd] of 1.75-2.0, an Abbé number [ν d] of 20-28.5, and a transmittance λ 80 equal to or less than 500nm and a transmittance λ 5 equal to or less than 385nm. In optical glass (3), the glass transition temperature [Tg] is not greater than 540°C, but can be made 520°C or less, 510°C or less, or 490°C or less. The glass yield point temperature [Ts] is normally not greater than 580°C, but can be made 570°C or less, 560°C or less, or 550°C or less. The viscosity at the liquid phase temperature is normally not less than 0.4 Pa • s.

Optical glasses (1) - (3) have optical constants in the form of a refractive index [nd] of 1.75-2.0 and an Abbé number [ν d] of 20-28.5. However, refractive index [nd] can be further restricted to 1.80-2.0, 1.83-2.0, and 1.83-1.9. The Abbé number [ ν d] can be kept within 23-28.

Optical glasses (1) - (3) may be, for example, an optical glass comprising, as molar percents, 12-34 percent of $P_2O_5$; 0.2-15 percent of $B_2O_3$; 0-25 percent of $Nb_2O_5$; 0-40 percent of $WO_3$; 4-45 percent of at least one $R'_2O$ selected from among $Li_2O$, $Na_2O$, and $K_2O$; and 0-30 molar percent (excluding 30 molar percent) of at least one RO selected from among BaO, ZnO, and SrO; with the total content of the above-stated components being equal to or more than 94 percent.

Optical glasses (1) - (3) may also be, for example, an optical glass comprising as a glass component, as molar percents, 12-34 percent of $P_2O_5$; 0.2-15 percent of $B_2O_3$ (where the total quantity of $P_2O_5$ and $B_2O_3$ is 15-35 percent); 0-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-25 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where the total quantity of $Li_2O$, $Na_2O$, and $K_2O$ is 10-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent. This optical glass has the same composition as the optical glass (6) described below.

Optical glasses (1)-(3) may also be, for example, an optical glass comprising, as molar percents, 15-30 percent of $P_2O_5$; 0.5-15 percent of $B_2O_3$; 5-25 percent of $Nb_2O_5$; 6-40 percent of $WO_3$; 4-45 percent of at least one $R'_2O$ selected from among $Li_2O$, $Na_2O$, and $K_2O$; and 0-30 molar percent (excluding 30 molar percent) of at least one RO selected from among BaO, ZnO, and SrO; with the total content of the above-stated components comprising not less than 95 percent. This optical glass has the same composition as the optical glass (4).

Optical glass (5) of the present invention has the glass composition comprising , as molar percents, 15-30 percent of $P_2O_5$; 0.5-15 percent of $B_2O_3$; 5-25 percent of $Nb_2O_5$; 6-40 percent of $WO_3$; not more than 10 percent of $TiO_2$; 4-45 percent of at least one $R'_2O$ selected from among $Li_2O$, $Na_2O$, and $K_2O$; and 0-30 molar percent (excluding 0 molar percent and 30 molar percent) of at least one RO selected from among BaO, ZnO, and SrO.

The particular preferred composition of optical glass (5) is, as molar percents, 15-30 percent of $P_2O_5$; 0.5-15 percent of $B_2O_3$; 5-25 percent of $Nb_2O_5$; 6-40 percent of $WO_3$; 0-25 percent of BaO; 0-15 percent of ZnO, 0-10 percent of $TiO_2$ (excluding 0 percent), and 4-45 percent of at least one $R'_2O$ selected from among $Li_2O$, $Na_2O$, and $K_2O$.

In optical glasses (4) and (5) described above, $P_2O_5$ forms a meshlike structure in the glass and is an essential component for imparting stability to the glass to permit manufacturing. However, when the content of $P_2O_5$ exceeds 30 molar percent, the Tg temperature and yield point temperature of the glass increase, the refractive index decreases, and the Abbé number tends to rise. At less than 15 molar percent, the glass tends strongly to lose transparency and the glass becomes unstable. Thus, the $P_2O_5$ content is set within the range of 15-30 molar percent, preferably within the range of 16-27 molar percent.

$B_2O_3$ is an essential component of the glass of the present invention. This is an extremely effective component for improving melting properties of the glass and for homogenizing the glass. At the same time, this is an extremely effective component because the incorporation of a small quantity of $B_2O_3$ changes the binding properties of OH within the glass and prevents the glass from bubbling during pressing. However, when more than 15 molar percent of $B_2O_3$ is incorporated, glass comprising a large quantity of $Nb_2O_5$ to maintain a high refractive index becomes extremely unstable. When less than 0.5 molar percent is introduced, the glass tends to bubble during precision press molding. Thus, the content is set to 0.5-15 molar percent, preferably 1-13 molar percent.

$Nb_2O_5$ is an essential component of the present invention. It is essential for imparting characteristics such as a high refractive index and high dispersion to the glass without using PbO, performing a highly important role in the present invention. However, when the content thereof exceeds 25 molar percent, there are disadvantages that the glass transition temperature and yield point temperature increase, stability deteriorates, high-temperature melting properties deteriorate, while bubbling and coloration of glass tend to occur during precision pressing. By contrast, when the content is less than 5 molar percent, the glass refractive index and dispersion decrease. Thus, the content of $Nb_2O_5$ is set to 5-25 molar percent, preferably 10-25 molar percent, and more preferably 12-22 molar percent.

$WO_3$ is an essential component of the present invention, imparting to the glass a high refractive index and high dispersion characteristics at low melting temperature without the use of PbO; it is the most effective component of the present invention. $WO_3$ performs the role of reducing the transition temperature and yield point temperature of the glass in the same manner as an alkali metal oxide, has the effect of raising the refractive index, and inhibits wetting between the glass and the mold material, thereby resulting in extremely good separation of the glass from the mold during precision press molding. It also has the effect of inhibiting increased wetting of the flowout pipe by molten glass. However, when the content of this component exceeds 40 molar percent, the glass tends to develop color and the high-temperature viscosity of the glass drops, making it difficult to manufacture glass preforms for precision pressing. At less than 6 molar percent, the glass transition temperature and yield point temperature rise and bubbles tend to form in the glass during precision pressing. Thus, the content is set at 6-40 molar percent, preferably 6-30 molar percent, more preferably 6-22 molar percent, and still more preferably 9-20 molar percent.

As an RO component, BaO increases the glass refractive index, improves resistance to loss of transparency, and lowers the liquid phase temperature. Since it also increases viscosity at the glass liquid phase temperature, the content thereof may be suitably selected. However, when the content of BaO exceeds 25 molar percent, not only does the glass become unstable, but also the chemical resistance of the glass deteriorates. Thus, the BaO content is preferably set to within the range of 0-25 molar percent. Further, when a lowering of the glass transition point is desired to decrease the pressing temperature, 0-22 molar percent is preferred, with 0-19 molar percent being even more preferred. However, since even small amounts of BaO have the effect of increasing resistance to loss of transparency, in consideration of the stability of the glass, 2-25 molar percent is preferred, 4-22 molar percent is more preferred, and 5-19 molar percent is even more preferred.

Further, from the perspective of resistance to loss of transparency, BaO can also be replaced with an $R'_2O$ ($Li_2O+Na_2O+K_2O$) component. In that case, the total of BaO and $R'_2O$ component is preferably 10-55 molar percent, more preferably 25-50 molar percent.

At least one from among $Li_2O$, $Na_2O$, and $K_2O$ is selected as $R'_2O$. Each of these components may be incorporated to improve the resistance of the glass to loss of transparency, decrease the yield point temperature and liquid phase temperature, and improve the high-temperature melting properties of the glass. Thus, not less than 2 molar percent each of $Li_2O$ and $Na_2O$ are thus desirably incorporated. However, when the quantity of each of $Li_2O$ and $Na_2O$ that is incorporated exceeds 30 molar percent, not only does the stability of the glass deteriorate, but also it becomes impossible to achieve the desired high refractive index and high dispersion characteristics. Accordingly, the content of each of $Li_2O$ and $Na_2O$ is suitably 2-30 molar percent, the content of $Li_2O$ preferably being 5-25 molar percent, more preferably 5-20 molar percent. Since $Li_2O$ is particularly effective at raising the refractive index, it is employed to advantage in the glass of the present invention, preferably at a content of 8-20 molar percent, particular preferably 10-20 molar percent. The content of $Na_2O$ is 3-25 molar percent, preferably 3-22 molar percent, more preferably 3-20 molar percent, and most preferably 5-13 molar percent. When excessive large quantity of alkali metal oxide is incorporated, not only does the stability of the glass deteriorate, but also it becomes impossible to achieve the desired high refractive index and high dispersion characteristics. Accordingly, the content of $K_2O$ is preferably not more than 15 molar percent, more preferably 0-8 molar percent, and particular preferably 1-5 molar percent.

The content of $R'_2O$ is 4-45 molar percent, preferably 8-45 molar percent, more preferably 15-45 molar percent, still more preferably 18-43 molar percent, and particular preferably 19-40 molar percent.

In addition to the above-described essential components, the optical glass (4) is preferably added as an optional component, given as molar percents: 0-10 percent of $TiO_2$, 0-12 percent of ZnO, 0-10 percent of SrO, 0-15 percent of $K_2O$, 0-5 percent of $Al_2O_3$, 0-1 percent of $Sb_2O_3$, and 0-1 percent of $As_2O_3$, and it is preferable that the total content of $Nb_2O_5$, $WO_3$, and $TiO_2$ is 25-45 percent; total content of BaO, ZnO, and SrO is 5-25 percent; the total content of $Li_2O$, $Na_2$, and $K_2O$ is 4-35 percent; and the total content of $P_2O_5$, $B_2O_3$, $Nb_2O_5$, $WO_3$, BaO, $Li_2O$, $Na_2O$, $TiO_2$, ZnO, SrO, $K_2O$, $Al_2O_3$, $Sb_2O_3$, and $As_2O_3$ is 95 percent or greater.

$TiO_2$ is an optional component having the effect of increasing the glass refractive index and improving resistance to loss of transparency. When the content thereof exceeds 10 molar percent, the resistance to loss of transparency of the glass deteriorates sharply, both the yield point temperature and liquid phase temperature rise abruptly, and the glass tends to develop color during precision pressing. Thus, the content of $TiO_2$ is preferably not more than 10 molar percent, more preferably not more than 9 molar percent, and still more preferably 2-9 molar percent. When the total content of $Nb_2O_5$, $WO_3$, and $TiO_2$ exceeds 45 molar percent, a high refractive index and high dispersion characteristics can be obtained, but the molten glass develops color and resistance to loss of transparency deteriorates; when the total content thereof is less than 25 molar percent, it becomes impossible to obtain desired optical characteristics such as [a high] refractive index and dispersion. Thus, the total content of $Nb_2O_5$, $WO_3$, and $TiO_2$ is preferably within the range of 25-45 molar percent, more preferably 27-42 molar percent, and still more preferably 30-40 molar percent. The content of $Nb_2O_5$ is preferably 10-29 molar percent, and that of $WO_3$ is preferably 3-30 molar percent.

ZnO, as an RO component, is an optional component incorporated to increase the glass refractive index and dispersion. The introduction of a small quantity of ZnO has the effect of reducing the glass transition temperature, yield point temperature, and liquid phase temperature. However, when a large quantity is introduced, the resistance of the glass to loss of transparency deteriorates sharply and the liquid phase temperature tends to rise. Thus, the content thereof is preferably not more than 15 molar percent, more preferably not more than 13 molar percent, and still more preferably 3-10 molar percent.

SrO, as an RO component, is an optional component of the present invention. The introduction of a small quantity of SrO into the glass has the effect of reducing the liquid phase temperature of the glass and increasing stability. However, when more than 10 molar percent is introduced, it becomes impossible to achieve the desired high refractive index and high dispersion characteristics and resistance to loss of transparency deteriorates. Thus, the content of SrO is preferably not more than 10 molar percent, more preferably not more than 8 molar percent. However, when the combined content of BaO, ZnO, and SrO reaches or exceeds 30 molar percent, glass stability deteriorates and both the yield point temperature and liquid phase temperature rise, making it impossible to achieve the desired low yield point temperature and low liquid phase temperature. Accordingly, the total of those compounds is preferably 5-25 molar percent, more preferably 6-23 molar percent, and still more preferably 10-20 molar percent.

The addition of a suitable quantity of $Al_2O_3$, an optional component, has the effect of increasing the viscosity at the liquid phase temperature of the glass and improving the durability of the glass. However, when 5 molar percent is exceeded, the glass tends not to melt and the yield point temperature and liquid phase temperature both rise. Accordingly, the total content is preferably not more than 5 molar percent, more preferably not more than 4 molar percent.

$As_2O_3$ and $Sb_2O_3$ are effective as glass clarifying agents. However, when either is added in a quantity exceeding 1 molar percent, the glass tends to develop bubbles during precision pressing. Thus, a content not exceeding 1 molar percent is preferred. If bubbles can be dealt with by the melting technique during melting of the glass, the omission of these compounds is preferable.

In the optical glass (4) of the present invention, the total quantity of the above-described essential components and optional components is preferably not less than 95 molar percent. In addition, $SiO_2$, $La_2O_3$, $Y_2O_3$, $Gd_2O_3$, $ZrO_2$, $Ta_2O_5$, $Bi_2O_3$, $TeO_2$, CaO, MgO, $Cs_2O$, and the like may be incorporated up to 5 molar percent so long as the object of the present invention is not lost.

Optical glass (5) of the present invention, in addition to the above-described essential components, further comprises not more than 12 percent of ZnO and not more than 10 percent of $TiO_2$ from among the above-described optional components. The total content of $Nb_2O_5$, $WO_3$, and $TiO_2$ is preferably 25-45 molar percent, more preferably 27-42 molar percent, and still more preferably, 30-40 molar percent. The total content of BaO and ZnO is preferably 5-25 molar percent, more preferably 6-23 molar percent, and still more preferably 10-20 molar percent.

Optical glass (5) of the present invention is preferably comprises, as molar percents, 15-30 percent of $P_2O_5$; 0.5-15 percent of $B_2O_3$; 5-25 percent of $Nb_2O_5$; 6-40 percent of $WO_3$; 0-25 percent of BaO; 0-15 percent of ZnO; 0-10 percent (excluding 0 percent) of $TiO_2$; 4-45 percent of at least one $R'_2O$ selected from among $Li_2O$, $Na_2O$, and $K_2O$; in particular, the content of BaO is preferably 5-25 percent.

In the optical glasses (1)-(5) of the present invention, the followings are preferred.

An optical glass in which a part of BaO was substituted by ZnO and/or SrO, and the content of ZnO ranges from 0 to 15 molar percent and the content of SrO ranges from 0 to 10 molar percent.

An optical glass in which a part of BaO was substituted by ZnO, and the content of ZnO ranges from 0 to 13 molar percent (excluding 0 percent).

An optical glass in which a part of BaO was substituted by ZnO, and the content of BaO ranges from 6 to 15 molar percent, and the content of ZnO ranges from 3 to 10 molar percent.

An optical glass in which the content of $R'_2O$ ranges from 15 to 45 molar percent.

An optical glass in which $R'_2O$ is $Li_2O$, $Na_2O$, and $K_2O$ and the contents of $Li_2O$, $Na_2O$, and $K_2O$ respectively ranges from 2 to 30 molar percent, 2 to 30 molar percent, and equal to or less than 15 molar percent.

An optical glass in which $R'_2O$ is $Li_2O$, $Na_2O$, and $K_2O$ and the contents of $Li_2O$, $Na_2O$, and $K_2O$ respectively ranges from 5 to 25 molar percent, 5 to 25 molar percent, and 0 to 8 molar percent.

An optical glass in which the content of $TiO_2$ is equal to or less than 10 molar percent.

An optical glass in which the content of $Nb_2O_5$ ranges from 10 to 25 molar percent, the content of $WO_3$ ranges from 6 to 30 molar percent and the content of $TiO_2$ ranges from 2 to 9 molar percent.

An optical glass in which the total content of $Nb_2O_5$, $WO_3$ and $TiO_2$ ranges from 30 to 40 molar percent.

An optical glass exhibiting a refractive index [nd] in the range of 1.75 to 2.0, an Abbé number [$\nu$ d] in the range of 20 to 28.5.

An optical glass exhibiting a yield point temperature [Ts] equal to or less than 580°C.

An optical glass exhibiting a glass transition temperature [Tg] equal to or less than 540°C.

An optical glass exhibiting a viscosity at a liquid phase temperature equal to or more than 0.4 Pa • s.

By employing the above-stated glass compositions, it is possible to obtain optical glasses (4) and (5) of the present invention with refractive indexes [nd] of 1.75-2.0, even 1.80-2.0, 1.83-2.0, and 1.83-1.9. Further, an Abbé number [$\nu$ d] of 20-28.5, even 23-28 can be obtained. A glass yield point temperature [Ts] of 580°C or less, or even 570°C or less, 560°C or less, or 550°C or less can be obtained. A glass transition temperature [Tg] of 540°C or less, 520°C or less, 510°C or less, or even 490°C or less can be obtained.

The viscosity at the liquid phase temperature of optical glasses (4) and (5) can be kept to 0.4 Pa • s or greater.

All of optical glasses (6)-(9) of the present invention have optical constants in the form of a refractive index nd of 1.7-2.0 and an Abbé number $\nu$ d of 20-32. All of optical glasses (6)-(9) of the present invention have a glass transition temperature Tg of not more than 530°C and a yield point temperature Ts of not more than 580°C, and are suited to precision press molding.

Although the optical glasses (6)-(9) of the present invention have optical constants in the form of a refractive index nd of 1.7-2.0 and an Abbé number $\nu$ d of 20-32, they preferably have a refractive index nd of 1.80-1.90 to obtain a more stable optical glass suited to precision press molding.

Further, the optical glasses (6)-(9) of the present invention preferably do not contain lead compounds such as PbO, and preferably do not contain $GeO_2$, in order to achieve the objects of the present invention.

The usual representative components of glass are glass formers in the form of $SiO_2$, $P_2O_5$, $B_2O_3$, and the like, and the usual glass modifiers are $Li_2O$, $Na_2O$, $K_2O$, $BaO$, $ZnO$, $Nb_2O_5$, $WO_3$, and the like. It is principally the electrons of oxygen ions that determine, based on whether the electrons of these oxygen ions are loosely or tightly bound, the absorption and dispersion of the glass constituted by these components. The absorption of oxygen in the glass includes crosslinked oxygen linking glass formers together and noncrosslinked oxygen that does not (oxygen bonded to modifier ions such as $Na^+$, $Ba^{2+}$, and $Y^{3+}$). Although absorption caused by the transfer of electrons of crosslinked oxygen in the ultraviolet range greatly affects the glass refractive index, it does not greatly affect dispersion. That is, the greater the absorption due to electron transfer in crosslinked oxygen, or the longer the wavelength of the peak absorption wavelength becomes, the greater the glass refractive index becomes, but the Abbé number does not change so much. By contrast, absorption due to electron transfer in noncrosslinked oxygen in the ultraviolet range greatly affects both the glass refractive index and dispersion. The longer the peak wavelength in absorption due to electron transfer in noncrosslinked oxygen, and the more intense the oscillators become, the greater the refractive index and dispersion become. Accordingly, to generate glass with a high refractive index and high dispersion, the generation of numerous noncrosslinked oxygens within the glass structure is thought to be extremely important.

That is, the present inventors think that to manufacture glass of high refractive index and high dispersion, it is extremely important to minimize the ratio of the number of former ions creating crosslinked oxygen ions to the total number of oxygen ions in the structural body per each unit volume of glass. Based on this idea, the present inventors developed the optical glasses (6)-(9) of the present invention.

That is, the present inventors discovered that in borophosphate glass, particularly in borophosphate glass comprising $P_2O_5$, $B_2O_3$, $WO_3$, and an alkali metal oxide compound, imparting an ion ratio of the number of oxygen ions per glass unit volume to the total quantity of phosphorus ions and boron ions serving as a former of the meshlike structure of the glass of 4.2 or more makes it possible to achieve a glass refractive index of 1.70 or more and an Abbé number of 32 or less. That is, it was discovered that the refractive index and dispersion of the glass could be controlled in borophosphate glasses by controlling the density of oxygen atoms per glass unit volume and the total quantity of formers of glass meshlike structure forming compounds.

Denoting the molar fraction of glass component Ci (hereinafter, i denotes an integer characteristic of the glass component) as Xi, the density of the glass at room temperature as d ($g/cm^3$), the molecular weight of glass component Ci as Mi, the number of oxygen atoms contained in one molecule of glass component Ci as Oi, and the average molecular weight of the glass as M (where M= $\Sigma$ MiXi, $\Sigma$ being a symbol meaning summation of those of all the glass components), the oxygen atom density D ($atoms/cm^3$) per unit volume of glass can be calculated from the following equation:

$$D = 6.023 \left( \frac{d}{M} \right) 10^{23} \sum X_i O_i$$

For example, Oi is five atoms for $P_2O_5$, Oi is 3three atoms for $B_2O_3$, and Oi is three atoms for $WO_3$.

The higher the density of oxygen per unit of glass, or the lower the content of glass former, the higher the refractive index and dispersion become. However, it is necessary to keep the ion ratio of the number of oxygen atoms per unit volume of glass to the total of phosphorus ions and boron ions serving as a former of the glass meshlike structure greater than 4.2. Thus, in the optical glass of the present invention, the oxygen atom density in the composition range permitting vitrification is set from $4.2 \times 10^{22}$ to $5.2 \times 10^{22}$ atoms/cm$^3$. When the oxygen atom density is less than $4.2 \times 10^{22}$/cm$^3$, the refractive index drops below 1.7, and when it exceeds $5.2 \times 10^{22}$/cm$^3$, the content of alkali metal ions and alkaline earth metal ions in the components with low oxygen atom densities decreases. As a result, the glass may crystallize or develop color. Thus, the oxygen atom density per unit volume of glass is preferably from $4.5 \times 10^{22}$ atoms/cm$^3$ to $5.0 \times 10^{22}$ atoms /cm$^3$.

The role of each of the glass components of the optical glasses (6) to (9) and the reasons for limiting their composition ranges will be described next.

$P_2O_5$ is a former of the glass meshlike structure and is an essential component for maintaining stability permitting the manufacture of glass. However, when the content of $P_2O_5$ exceeds 34 molar percent, the glass transition temperature Tg and the yield point temperature Ts tend to rise, the refractive index nd tends to drop, and the Abbé number ν d tends to increase. When the $P_2O_5$ content is less than 12 molar percent, the tendency of the glass to lose transparency increases and the glass becomes unstable. Thus, the quantity of $P_2O_5$ is set to a range of 12-34 molar percent. The $P_2O_5$ content is preferably within a range of 14-32 molar percent.

$B_2O_3$ is also an essential component of the glass of the present invention. It is a component effective for enhancing the melting properties of the glass and homogenizing the glass, and extremely effective for changing the bonding property of OH within the glass when a small quantity of $B_2O_3$ is introduced and preventing the glass from bubbling during pressing. However, when the $B_2O_3$ content exceeds 15 molar percent, the glass of the present invention becomes highly unstable due to the introduction of large quantities of $Nb_2O_5$ and $WO_3$ having numerous noncrosslinked oxygens to maintain a high refractive index. Conversely, when the $B_2O_3$ content is less than 0.2 molar percent, the glass tends to develop bubbles during precision press molding. Accordingly, the range of the $B_2O_3$ content is set to 0.2-15 molar percent, preferably 0.5-13 molar percent.

The total content of $B_2O_3$ and $P_2O_5$ as glass meshlike structure formers is limited to the range of 15-35 molar percent. When the total quantity of $P_2O_5$ and $B_2O_3$ exceeds 35 molar percent, the glass refractive index drops and the Abbé number increases. Conversely, when the total quantity of $P_2O_5$ and $B_2O_3$ is less than 15 molar percent, the glass becomes extremely unstable. The total quantity of $P_2O_5$ and $B_2O_3$ is more preferably within the range of 16-32 molar percent.

$WO_3$ is the most effective component for imparting a high refractive index and high dispersion properties at a low melting point without employing PbO. $WO_3$ imparts numerous noncrosslinked oxygens to the glass, has the effect of reducing the glass transition temperature and yield point temperature in the same manner as alkali metal oxides, and also has the effect for raising the refractive index. Since it also has the effect of inhibiting wetting of the mold material by the glass, it substantially improves separation of the glass from the mold during precision press molding. However, when the content of $WO_3$ exceeds 45 molar percent, the glass may develop color, adhere due to melt and since the high temperature viscosity of the glass drops, it becomes difficult to manufacture glass preforms for precision pressing. Conversely, when the $WO_3$ content is not more than 6 molar percent, the glass transition temperature and yield point temperature rise and bubbles tend to form in the glass during precision pressing. Provided, even if the $WO_3$ content is not more than 6 molar percent, rise of the glass transition temperature and yield point temperature and occurrence of bubbles in the glass can be suppressed by adjusting other components such as increasing the content of alkali metal oxides and reduction of the $TiO_2$ and/or $Nb_2O_5$ content. Accordingly, the $WO_3$ content is to be the range of 0-45 molar percent. The $WO_3$ content may be within the range of 2-45 molar percent and more preferably within the range of 5-40 molar percent

$Nb_2O_5$ is a component capable of imparting a large quantity of noncrosslinked oxygens to the glass and can impart characteristics such as high refractive index and high dispersion to the glass without the use of PbO. However, when the content of $Nb_2O_5$ exceeds 25 molar percent, the glass transition temperature and yield point temperature rise, stability deteriorates, high-temperature melting properties deteriorate, and the glass tends to develop bubbles and color during precision pressing. Accordingly, the content of $Nb_2O_5$ is not more than 25 molar percent. The $Nb_2O_5$

content is preferably within the range of 5-23 molar percent.

TiO$_2$ is a component capable of imparting a large amount of noncrosslinked oxygens to the glass and thus has the effect of raising the refractive index and dispersion of the glass, as well as improving transparency stability. However, when the content of TiO$_2$ exceeds 10 molar percent, the transparency stability of the glass deteriorates sharply, the yield point temperature and liquid phase temperature rise sharply, and the glass tends to develop color during precision pressing. Accordingly, the content of TiO$_2$ is set to not more than 10 molar percent, preferably not more than 9 molar percent.

When the total quantity of WO$_3$, Nb$_2$O$_5$, and TiO$_2$ exceeds 45 molar percent, although a high refractive index and high dispersion characteristics are achieved, the molten glass develops color and transparency stability deteriorates. When the total quantity is less than 20 percent, the number of noncrosslinked oxygens in the glass decreases, making it impossible to obtain the desired refractive index or dispersion. Thus, the total quantity of WO$_3$, Nb$_2$O$_5$, and TiO$_2$ is set to the range of 20-45 molar percent. The total quantity preferably ranges from 21 to 42 molar percent and more preferably 25-42 molar percent. The coloring of glass with higher alkali metal oxide content can be avoided by controlling the total quantity of WO$_3$, Nb$_2$O$_5$, and TiO$_2$ within the above range.

BaO is a component for increasing the refractive index of the glass, enhancing transparency stability and lowering the liquid phase temperature. Particularly when a large quantity of WO$_3$ is incorporated, the introduction of BaO suppresses the development of color in the glass and enhances transparency stability (resistance to transparency loss). However, when the content of BaO exceeds 25 molar percent, not only does the glass become unstable, but also chemical durability and dispersion may deteriorate and glass transition temperature may rise. Accordingly, the content of BaO is set to not more than 25 molar percent, preferably not more than 23 molar percent. The content of BaO is more preferably set to not more than 11 molar percent, still more preferably not more than 8 molar percent.

ZnO is a component that is incorporated to increase the refractive index and dispersion of the glass. The introduction of a small quantity of ZnO has the effect of decreasing the glass transition temperature, yield point temperature, and liquid phase temperature. However, when a large quantity is introduced, the transparency stability of the glass deteriorates sharply and may cause the liquid phase temperature to rise. Thus, the content thereof is set to not more than 20 percent, preferably not more than 17 percent.

The total quantity of BaO and ZnO is set to less than 30 molar percent. When the total quantity of BaO and ZnO is 30 molar percent or more, glass stability deteriorates and the yield point temperature and liquid phase temperature rise, making it impossible to obtain the desired low yield point temperature and low liquid phase temperature. Accordingly, the total content of BaO and ZnO is set to less than 30 molar percent, preferably not more than 25 molar percent.

Alkali metal oxides such as Li$_2$O, Na$_2$O, and K$_2$O are components that are incorporated for improving the resistance to loss of transparency of the glass, for decreasing the yield point temperature and liquid phase temperature, and for improving the high temperature melting properties of the glass. Thus, the content of each of Li$_2$O and Na$_2$O is set to not less than 2 molar percent, and the total content of Li$_2$O, Na$_2$O, and K$_2$O is set to not less than 10 molar percent in the optical glass (6)-(8) of the present invention. However, when the total contents of Li$_2$O, Na$_2$O, and K$_2$O exceed 45 molar percent, not only does the stability of the glass deteriorate, but also it becomes impossible to achieve the desired high refractive index and high dispersion characteristics. Accordingly, the content of Li$_2$O is set to 2-30 molar percent, the content of Na$_2$O to 2-30 molar percent, and the content of K$_2$O to 0-15 molar percent. Further, the total content of these three alkali metal oxides is set to the range of 10-45 molar percent. More preferably, the Li$_2$O content is 5-27 molar percent, the Na$_2$O content is 3-27 molar percent, and the K$_2$O content is 0-13 molar percent, and the total content thereof is 12-43 molar percent. More preferably, the total content of Li$_2$O, Na$_2$O, and K$_2$O is equal to or more than 29 molar percent, even more preferably equal to or more than 32 molar percent. Further, the total content of Li$_2$O and Na$_2$O is preferably equal to or more than 27 molar percent.

Further, alkali metal oxides may also be incorporated into the optical glass (9) of the present invention. At least one selected from among Li$_2$O, Na$_2$O, and K$_2$O is selected as the alkali metal oxide. In the optical glass (9) of the present invention, the content of Li$_2$O is preferably 2-30 molar percent, more preferably 5-27 molar percent. The total content of Li$_2$O, Na$_2$O, and K$_2$O of the optical glass (9) of the present invention is the same as those of the optical glasses (6) to (8) of the present invention mentioned above.

CaO, SrO, Y$_2$O$_3$, and Al$_2$O$_3$ are all optional components. The introduction of small quantities of CaO, SrO, Y$_2$O$_3$, and Al$_2$O$_3$ has the effects of decreasing the liquid phase temperature of the glass and improving stability. However, when the individual quantities of CaO and SrO exceed 10 molar percent, it is impossible to achieve the desired high refractive index and high dispersion characteristics, and resistance to loss of transparency deteriorates. Further, the same occurs when the content of Y$_2$O$_3$ exceeds 5 molar percent. Thus, the individual contents of CaO and SrO are not more than 10 percent, and the content of Y$_2$O$_3$ is not more than 5 molar percent. The preferred content of CaO is 0-8 molar percent, that of SrO is 0-8 molar percent, and that of Y$_2$O$_3$ is 0-4 molar percent. The addition in suitable quantity of Al$_2$O$_3$, an optional component, effectively improves viscosity at the liquid phase temperature of the glass and improves the durability of the glass. However, when Al$_2$O$_3$ is incorporated in a quantity exceeding 5 molar percent, the glass tends not to melt and the yield point temperature and liquid phase temperature rise. Accordingly, the $Al_2O_3$ content is set to not more than 5 molar percent, preferably not more than 4 molar percent.

$As_2O_3$ and $Sb_2O_3$ are effective as glass clarifying agents. However, when either is added in a quantity exceeding 1 molar percent, the glass tends to develop bubbles during precision pressing. Thus, the content is set to not more than 1 molar percent.

The contents of each of the glass components has been described above. The total contents of all of these components is preferably not less than 94 molar percent, more preferably not less than 97 molar percent, still more preferably not less than 98 molar percent. It is also desirable to consist only of the above-described components except for impurities.

Specific examples of the optical glasses (6) -(9) of the present invention with more preferred composition ranges will be described next.

In more preferred composition ranges mentioned above, when denoted as molar percents, the contents of the glass components are: 14-32 percent of $P_2O_5$, 0.5-13 percent of $B_2O_3$ (where the total quantity of $P_2O_5$ and $B_2O_3$ is 16-32 percent), 5-40 percent of $WO_3$, 5-23 percent of $Nb_2O_5$, 0-9 percent of $TiO_2$ (where the total quantity of $WO_3$, $Nb_2O_5$,and $TiO_2$ is 25-42 percent), 5-27 percent of $Li_2O$, 3-27 percent of $Na_2O$, 0-13 percent of $K_2O$ (where the total quantity of $Li_2O$, $Na_2O$, and $K_2O$ is 12-43 percent), 0-23 percent of $BaO$, 0-17 percent of $ZnO$ (where the total quantity of $BaO$ and $ZnO$ is 0-25 percent), 0-8 percent of $CaO$, 0-8 percent of $SrO$, 0-4 percent of $Al_2O_3$, 0-4 percent of $Y_2O_3$, 0-1 percent of $Sb_2O_3$, and 0-1 percent of $As_2O_3$, where the total content of all of these components is not less than 94 percent. Within these ranges, the total content of all of the above-listed components is more preferably not less than 98 molar percent, and those consisting of only these components, except for impurities, are particular preferred.

In further preferred ranges within more preferred composition ranges mentioned above, when denoted as molar percents, the contents of the glass components are: 17-30 percent of $P_2O_5$, 1-10 percent of $B_2O_3$ (where the total quantity of $P_2O_5$ and $B_2O_3$ is 18-32 percent), 5-25 percent of $WO_3$, 10-23 percent of $Nb_2O_5$, 1-9 percent of $TiO_2$ (where the total quantity of $WO_3$, $Nb_2O_5$, and $TiO_2$ is 28-40 percent), 5-22 percent of $Li_2O$, 4-22 percent of $Na_2O$, 0.5-7 percent of $K_2O$ (where the total quantity of $Li_2O$, $Na_2O$, and $K_2O$ is 12-38 percent), 2-23 percent of $BaO$, 1-10 percent of $ZnO$ (where the total quantity of $BaO$ and $ZnO$ is 3-25 percent), where the total of all of these components is not less than 94 percent. Within these ranges, the total of all of the above-listed components is preferably not less than 98 molar percent, and those consisting of only these components, except for impurities, are particular preferred.

Components such as $SiO_2$, $La_2O_3$, $Y_2O_3$, $Gd_2O_3$, $ZrO_2$, $Ta_2O_5$, $Bi_2O_3$, $TeO_2$, $CaO$, $MgO$, and $Cs_2O$ may also be incorporated up to 6 percent so long as the object of the present invention is not lost.

In the low-melting-point, high refractive index, high dispersion optical glass of the present invention, the starting material for $P_2O_5$ is $H_3PO_4$, metaphosphate, diphosphorus pentoxide, or the like; the starting material for $B_2O_3$ is $HBO_3$, $B_2O_3$, or the like, and carbonates, nitrates, oxides, and the like may be suitably employed for the other components. These starting materials are weighed out in a prescribed ratio and mixed as ready mixed starting materials, which are then introduced to a melting furnace that has been heated to 1,000-1,250°C. The starting materials are then melted, clarified, stirred, and homogenized, and then introduced into a casting mold and gradually cooled, yielding the low-melting-point, high refractive index, high dispersion optical glass of the present invention.

The optical glass has a liquid phase temperature of not more than 970°C, and since it retains a stable glass state at a viscosity suited to the molding of the precision press molded materials (referred to hereinafter as preforms) of the present invention from molten glass, preforms can be hot molded. Hot molding can be performed by causing molten glass to drip or flow down, receiving it in a receiving mold through a gas, and molding it into a desired shape such as a sphere or flattened sphere.

When employing dripping to produce preforms, the glass temperature is adjusted to a viscosity capable of dripping, for example 1-3 Pa · s and the glass is dripped, yielding spherical preforms. The dripped glass may be solidified during dripping, or floated on a blown gas and solidified while being rotated.

When employing flow down to produce preforms, the glass is cut once it flows out of a flowout pipe, the glass flowing down is received in a receiving mold through a gas, and the glass is molded into a sphere or flattened sphere and solidified. At this time, the glass that has been made to flow down is preferably cut without using a cutting blade. Among such cutting methods, the method where the receiving mold receives the front end of the glass that is flowing down and is then quickly lowered to sever the glass (referred to hereinafter as the drop cut method) is particular preferred. The viscosity of the glass flowing down when molding flowing glass into preforms is preferably 3-60 poise.

Based on this method, the molten glass flowing down from the flowout pipe is naturally dripped or cut by the drop cut method or with a cutting blade, making the molten glass glob dripped. The molten glass glob is then received in a depression in a receiving mold. In this process, air, an inert gas, or some other gas is blown out through minute holes opening at the depression to create a gas layer between the molten glass glob and the inner surface of the receiving mold depression. The molten glass glob is maintained and cooled within the depression in a state of substantial non-contact with the inner surface of the depression until at least a portion of the outer surface of the molten glass glob reaches a temperature not greater than the melting temperature to efficiently manufacture glass preforms (precision press molded material).

The optical part of the present invention is obtained by precision press molding of a preform comprised of the above-described high refractive index, high dispersion optical glass of the present invention. Here, precision press molding refers to a molding method whereby a final product (in particular, optical parts such as lenses requiring high precision) is directly manufactured by press molding without a grinding or polishing step following pressing, where a molded product is obtained by precisely transferring to glass the shape of the molding surface of a mold that has been precisely manufactured beforehand corresponding to the shape of the final product. Known pressing methods and devices may be employed, and the conditions may be suitably selected in consideration of the composition and physical properties of the glass. Aspherical lenses are an example of an optical part that is suitably manufactured by this method.

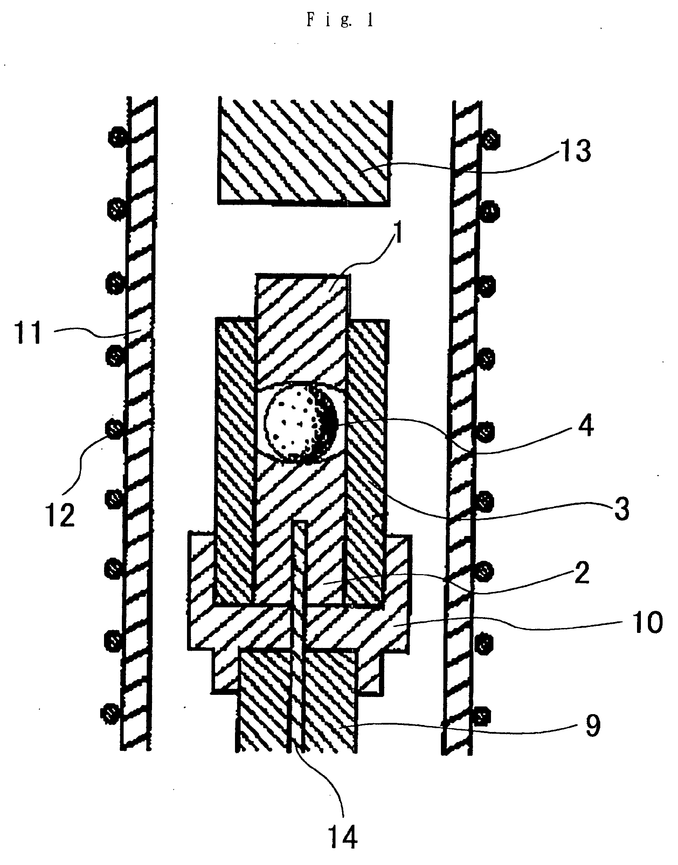

For example, the press device as shown in Fig. 1 may be employed in precision press molding. In the device shown in Fig. 1, a casting mold comprised of an upper mold 1, a lower mold 2, and a guide mold 3 is mounted on a support base 10 positioned on a support rod 9, and the whole is positioned within a quartz tube 11 around which a heater 12 is wound. A glass preform 4 consisting of the high refractive index, high dispersion optical glass of the present invention, for example, in the form of a sphere or elliptical sphere with a diameter of about 2-20 mm can be employed. The size of the sphere or elliptical sphere is suitably determined in light of the size of the final product.

Once glass preform 4 has been positioned between lower mold 2 and upper mold 1, electricity is supplied to heater 12 and quartz tube 11 is heated. The temperature within the casting mold is controlled by means of a thermocouple 14 inserted into lower mold 2. The heating temperature is set to the extent that the viscosity of the glass preform 4 is suited to precision press molding, for example to about $10^{7.6}$ poise. Once a prescribed temperature has been reached, pressure rod 13 is dropped downward, pushing upper mold 1 from above and pressing glass preform 4 within the casting mold. The pressure and duration of press are suitably determined in consideration of the viscosity of the glass and the like. For example, a pressure of about 5-15 MPa and a duration of 10-300 seconds may be employed. After pressing, the glass is slowly cooled to the glass transition temperature, and then rapidly cooled to room temperature. The molded product is then removed from the casting mold to obtain the optical part of the present invention.

The above-described optical glass is not limited to a glass for precision press molding; it can be applied to all applications of optical glass and applications demanding high-quality properties.

### [Examples]

The present invention is described in detail below through examples. However, the present invention is in no way limited by these examples.

Examples 1-83

Corresponding oxides, fluorides, hydroxides, carbonates, sulfates, and nitrates were employed as the starting materials of each of the glass components. These were weighed out, thoroughly mixed, charged to a platinum crucible, melted at 1,000-1,250°C with an electric furnace, stirred, homogenized, clarified, and poured into a metal mold preheated to a suitable temperature, then cooled to the transition temperature of the glass, immediately charged to an annealing furnace, and gradually cooled to room temperature to manufacture optical glass of the compositions shown in Tables 1-14.

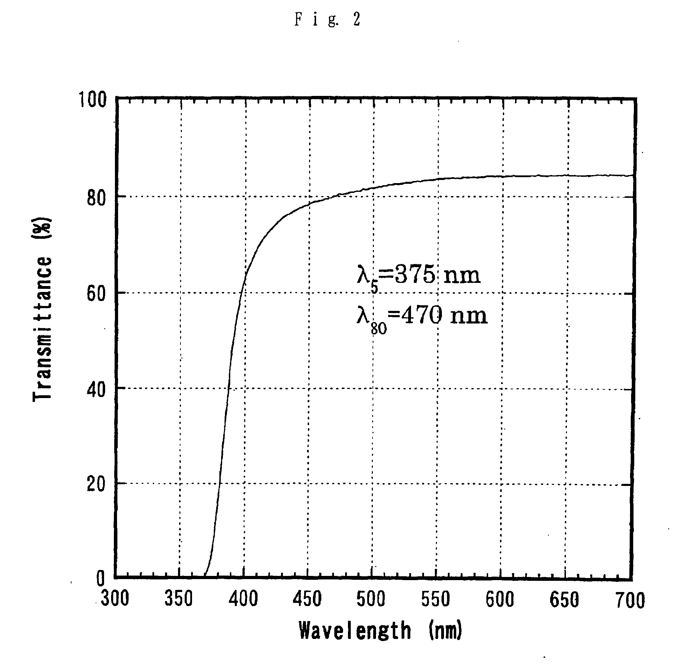

The refractive index [nd], Abbé number [ν d], transition temperature [Tg], yield point temperature [Ts], liquid phase temperature [L.T.], and viscosity and coloration at the liquid phase temperature of the optical glass obtained were measured in the following manner. The results are given in Tables 1-14. In addition, spectro-transmittance curves of optical glasses of Examples 78-83 were measured and the spectro-transmittance curve of Example 78 were shown in Fig. 2. Transmittance λ 80 and λ 5 of Example 78 and Examples 79-83 are listed in Table 15.

Table 1

| Glass compositions and characteristics of Examples (mol%) | | | | | | |
|---|---|---|---|---|---|---|
| Component (mol%) | Ex. 1 | Ex. 2 | Ex. 3 | Ex. 4 | Ex. 5 | Ex. 6 |
| $P_2O_5$ | 25 | 25 | 20 | 20 | 20 | 17 |
| $B_2O_3$ | 5 | 5 | 5 | 5 | 5 | 5 |
| $WO_3$ | 6 | 6 | 10 | 15 | 20 | 18 |
| $Li_2O$ | 12 | 12 | 12 | 12 | 12 | 12 |
| $Na_2O$ | 10 | 10 | 10 | 10 | 10 | 10 |

Table 1   (continued)

| Glass compositions and characteristics of Examples (mol%) | | | | | | |
|---|---|---|---|---|---|---|
| Component (mol%) | Ex. 1 | Ex. 2 | Ex. 3 | Ex. 4 | Ex. 5 | Ex. 6 |
| $K_2O$ | 3 | 3 | 3 | 3 | 3 | 3 |
| $Nb_2O_5$ | 23 | 23 | 20 | 15 | 10 | 12 |
| $TiO_2$ | | | 5 | 5 | 5 | 5 |
| CaO | | | | | | |
| SrO | | | | | | |
| BaO | 16 | 14 | 15 | 15 | 15 | 18 |
| $BaF_2$ | | 2 | | | | |
| ZnO | | | | | | |
| $Al_2O_3$ | | | | | | |
| $Y_2O_3$ | | | | | | |
| Total content | 100 | 100 | 100 | 100 | 100 | 100 |
| $P_2O_5+B_2O_3$ | 30 | 30 | 25 | 25 | 25 | 22 |
| $Li_2O+Na_2O+K_2O$ | 25 | 25 | 25 | 25 | 25 | 25 |
| $WO_3+Nb_2O_5+TiO_2$ | 29 | 29 | 35 | 35 | 35 | 35 |
| Transition temperature(°C) | 516 | 505 | 508 | 492 | 475 | 466 |
| Yield point temperature(°C) | 569 | 556 | 559 | 541 | 528 | 514 |
| Liquid phase temperature(°C) | 960 | 960 | 950 | 899 | 820 | 880 |
| Refractive index(nd) | 1.82159 | 1.81971 | 1.85952 | 1.83263 | 1.80631 | 1.82606 |
| Abbe number( ν d) | 25.62 | 25.66 | 23.68 | 24.89 | 26.34 | 26.09 |
| Viscosity at liquid phase temperature (Pas • s) | 0.4 | 0.4 | 0.2 | 0.4 | 1 | 0.3 |
| Density(g/cm³) | 3.86 | 3.86 | 4.02 | 4.1 | 4.19 | 4.28 |
| Density of oxygen atoms($10^{22}$/cm³) | 4.83 | 4.78 | 4.83 | 4.82 | 4.8 | 4.73 |

Table 2

| Glass compositions and characteristics of Examples (mol%) | | | | | | |
|---|---|---|---|---|---|---|
| Component (mol%) | Ex.7 | Ex.8 | Ex.9 | Ex.10 | Ex.11 | Ex. 12 |
| $P_2O_5$ | 17 | 18 | 20 | 20 | 23 | 22 |
| $B_2O_3$ | 5 | 5 | 5 | 5 | 5 | 5 |
| $WO_3$ | 18 | 18 | 17.5 | 15 | 17.5 | 17.5 |
| $Li_2O$ | 12 | 12 | 12 | 12 | 12 | 12 |
| $Na_2O$ | 10 | 10 | 10 | 10 | 9 | 9 |
| $K_2O$ | 3 | 3 | 3 | 3 | 2 | 2 |
| $Nb_2O_5$ | 12 | 12 | 17.5 | 15 | 17.5 | 17.5 |
| $TiO_2$ | 5 | 5 | | 5 | | |
| CaO | | | | | | |
| SrO | | | 2 | | | |

Table 2   (continued)

| Glass compositions and characteristics of Examples (mol%) | | | | | | |
|---|---|---|---|---|---|---|
| Component (mol%) | Ex.7 | Ex.8 | Ex.9 | Ex.10 | Ex.11 | Ex. 12 |
| BaO | 16 | 10 | 6 | 8 | 8 | 10 |
| $BaF_2$ | | | | | | |
| ZnO | | 7 | 7 | 7 | 6 | 5 |
| $Al_2O_3$ | 2 | | | | | |
| $Y_2O_3$ | | | | | | |
| Total content | 100 | 100 | 100 | 100 | 100 | 100 |
| $P_2O_5+B_2O_3$ | 22 | 23 | 25 | 25 | 28 | 27 |
| $Li_2O+Na_2O+K_2O$ | 25 | 25 | 25 | 25 | 23 | 23 |
| $WO_3+Nb_2O_5+TiO_2$ | 35 | 35 | 35 | 35 | 35 | 35 |
| Transition temperature(°C ) | 463 | 455 | 467 | 467 | 486 | 487 |
| Yield point temperature(°C) | 512 | 502 | 512 | 516 | 533 | 534 |
| Liquid phase temperature(°C) | 890 | 880 | 945 | 916 | 919 | 923 |
| Refractive index(nd) | 1.82548 | 1.83019 | 1.84748 | 1.84253 | 1.83865 | 1.84227 |
| Abbe number( ν d) | 25.91 | 24.78 | 24.01 | 23.83 | 24.06 | 24.24 |
| Viscosity at liquid phase temperature (Pas • s) | 0.3 | 0.4 | 0.3 | 0.3 | 0.4 | 0.3 |
| Density(g/cm$^3$) | 4.27 | 4.17 | 4.12 | 4.03 | 4.06 | 4.11 |
| Density of oxygen atoms($10^{22}$/cm$^3$) | 4.83 | 4.85 | 4.93 | 4.9 | 4.96 | 4.93 |

Table 3

| Glass compositions and characteristics of Examples (mol%) | | | | | | |
|---|---|---|---|---|---|---|
| Component (mol%) | Ex. 13 | Ex. 14 | Ex. 15 | Ex. 16 | Ex. 17 | Ex. 18 |
| $P_2O_5$ | 22 | 20 | 20 | 21 | 22 | 22 |
| $B_2O_3$ | 5 | 5 | 5 | 5 | 5 | 5 |
| $WO_3$ | 15 | 11 | 12 | 10 | 10 | 12 |
| $Li_2O$ | 12 | 12 | 12 | 12 | 12 | 12 |
| $Na_2O$ | 9 | 10 | 10 | 10 | 10 | 9 |
| $K_2O$ | 2 | 3 | 3 | 3 | 3 | 2 |
| $Nb_2O_5$ | 15 | 19 | 18 | 20 | 20 | 18 |
| $TiO_2$ | 5 | 5 | 5 | 5 | 5 | 5 |
| CaO | | | | | | |
| SrO | | | | | | |
| BaO | 10 | 15 | 12 | 14 | 13 | 10 |
| $BaF_2$ | | | | | | |
| ZnO | 5 | | 3 | | | 5 |
| $Al_2O_3$ | | | | | | |
| $Y_2O_3$ | | | | | | |

Table 3   (continued)

| Glass compositions and characteristics of Examples (mol%) | | | | | | |
|---|---|---|---|---|---|---|
| Component (mol%) | Ex. 13 | Ex. 14 | Ex. 15 | Ex. 16 | Ex. 17 | Ex. 18 |
| Total content | 100 | 100 | 100 | 100 | 100 | 100 |
| $P_2O_5+B_2O_3$ | 27 | 25 | 25 | 26 | 27 | 27 |
| $Li_2O+Na_2O+K_2O$ | 23 | 25 | 25 | 25 | 25 | 23 |
| $WO_3+Nb_2O_5+TiO_2$ | 35 | 35 | 35 | 35 | 35 | 35 |
| Transition temperature(°C ) | 485 | 502 | 490 | 511 | 508 | 495 |
| Yield point temperature(°C) | 533 | 551 | 542 | 566 | 559 | 548 |
| Liquid phase temperature(°C) | 896 | 940 | 935 | 938 | 928 | 917 |
| Refractive index(nd) | 1.83716 | 1.85408 | 1.85282 | 1.85502 | 1.85059 | 1.85241 |
| Abbe number( ν d) | 24.08 | 23.88 | 23.7 | 23.63 | 23.59 | 23.4 |
| Viscosity at liquid phase temperature (Pas • s) | 0.4 | 0.3 | 0.3 | 0.3 | 0.4 | 0.4 |
| Density(g/cm$^3$) | 4.03 | 4.04 | 4.03 | 3.97 | 3.94 | 3.98 |
| Density of oxygen atoms($10^{22}$ /cm$^3$) | 4.94 | 4.83 | 4.87 | 4.84 | 4.87 | 4.95 |

Table 4

| Glass compositions and characteristics of Examples (mol%) | | | | | | |
|---|---|---|---|---|---|---|
| Component (mol%) | Ex. 19 | Ex. 20 | Ex. 21 | Ex. 22 | Ex. 23 | Ex. 24 |
| $P_2O_5$ | 22 | 22 | 24 | 24 | 24 | 24 |
| $B_2O_3$ | 5 | 5 | 3 | 3.5 | 3 | 5 |
| $WO_3$ | 11 | 15.5 | 12 | 11 | 11 | 11.5 |
| $Li_2O$ | 12 | 12 | 12 | 12 | 9 | 12 |
| $Na_2O$ | 9 | 9 | 9 | 9 | 12 | 9 |
| $K_2O$ | 2 | 2 | 2 | 2 | 2 | 2 |
| $Nb_2O_5$ | 19 | 19.5 | 18 | 18.5 | 19 | 18.5 |
| $TiO_2$ | 5 | | 5 | 5 | 5 | 5 |
| CaO | | | | | | |
| SrO | | | | | | |
| BaO | 15 | 9 | 10 | 8 | 8 | 8 |
| $BaF_2$ | | | | | | |
| ZnO | | 6 | 5 | 7 | 7 | 5 |
| $Al_2O_3$ | | | | | | |
| $Y_2O_3$ | | | | | | |
| Total content | 100 | 100 | 100 | 100 | 100 | 100 |
| $P_2O_5+B_2O_3$ | 27 | 27 | 27 | 27.5 | 27 | 29 |
| $Li_2O+Na_2O+K_2O$ | 23 | 23 | 23 | 23 | 23 | 23 |
| $WO_3+Nb_2O_5+TiO_2$ | 35 | 35 | 35 | 34.5 | 35 | 35 |
| Transition temperature(°C ) | 511 | 492 | 503 | 498 | 507 | 503 |

Table 4   (continued)

| Glass compositions and characteristics of Examples (mol%) | | | | | | |
|---|---|---|---|---|---|---|
| Component (mol%) | Ex. 19 | Ex. 20 | Ex. 21 | Ex. 22 | Ex. 23 | Ex. 24 |
| Yield point temperature(°C) | 563 | 543 | 556 | 549 | 559 | 554 |
| Liquid phase temperature(°C ) | 924 | 940 | 910 | 918 | 923 | 941 |
| Refractive index(nd) | 1.85176 | 1.85315 | 1.8459 | 1.83771 | 1.84817 | 1.8462 |
| Abbe number( ν d) | 23.85 | 23.63 | 23.54 | 23.26 | 23.27 | 23.27 |
| Viscosity at liquid phase temperature (Pas • s) | 0.4 | 0.4 | 0.8 | 0.9 | 1 | 0.7 |
| Density(g/cm$^3$) | 4.01 | 4.07 | 3.96 | 3.91 | 3.91 | 3.9 |
| Density of oxygen atoms($10^{22}$ /cm$^3$) | 4.89 | 4.94 | 4.94 | 4.96 | 4.91 | 5 |

Table 5

| Glass compositions and characteristics of Examples (mol%) | | | | | | |
|---|---|---|---|---|---|---|
| Component (mol%) | Ex. 25 | Ex. 26 | Ex. 27 | Ex. 28 | Ex. 29 | Ex. 30 |
| $P_2O_5$ | 25 | 24 | 24 | 24 | 22 | 20 |
| $B_2O_3$ | 3 | 3 | 3 | 4 | 3 | 3 |
| $WO_3$ | 10 | 12 | 12 | 10 | 10 | 10 |
| $Li_2O$ | 12 | 12 | 16 | 18 | 16 | 15 |
| $Na_2O$ | 8 | 7 | 10 | 14 | 18 | 20 |
| $K_2O$ | 2 | 2 | 2 | 2 | 8 | 7 |
| $Nb_2O_5$ | 19 | 18 | 18 | 20 | 18 | 18 |
| $TiO_2$ | 5 | 4.5 | 5 | 8 | 5 | 5 |
| CaO | | | | | | |
| SrO | | | | | | |
| BaO | 8 | 11 | 5 | | | 2 |
| $BaF_2$ | | | | | | |
| ZnO | 8 | 6.5 | 5 | | | |
| $Al_2O_3$ | | | | | | |
| $Y_2O_3$ | | | | | | |
| Total content | 100 | 100 | 100 | 100 | 100 | 100 |
| $P_2O_5+B_2O_3$ | 28 | 27 | 27 | 28 | 25 | 23 |
| $Li_2O+Na_2O+K_2O$ | 22 | 21 | 28 | 34 | 42 | 42 |
| $WO_3+Nb_2O_5+TiO_2$ | 34 | 34.5 | 35 | 38 | 33 | 33 |
| Transition temperature(°C ) | 509 | 508 | 486 | 493 | 446 | 441 |
| Yield point temperature(°C) | 564 | 558 | 548 | 546 | 495 | 496 |
| Liquid phase temperature(°C ) | 950 | 921 | 905 | 925 | 890 | 875 |
| Refractive index(nd) | 1.84832 | 1.84903 | 1.84151 | 1.84937 | 1.80851 | 1.81741 |
| Abbe number( ν d) | 23.29 | 23.55 | 23.25 | 21.96 | 23.5 | 23.92 |
| Viscosity at liquid phase temperature (Pas • s) | 0.6 | 0.9 | 0.9 | 0.9 | 0.4 | 0.3 |

Table 5   (continued)

| Glass compositions and characteristics of Examples (mol%) | | | | | | |
|---|---|---|---|---|---|---|
| Component (mol%) | Ex. 25 | Ex. 26 | Ex. 27 | Ex. 28 | Ex. 29 | Ex. 30 |
| Density(g/cm$^3$) | 3.9 | 4.02 | 3.84 | 3.63 | 3.45 | 3.49 |
| Density of oxygen atoms($10^{22}$/cm$^3$) | 4.99 | 4.97 | 4.99 | 5.03 | 4.59 | 4.5 |

Table 6

| Glass compositions and characteristics of Examples (mol%) | | | | | | |
|---|---|---|---|---|---|---|
| Component (mol%) | Ex. 31 | Ex. 32 | Ex. 33 | Ex. 34 | Ex. 35 | Ex. 36 |
| $P_2O_5$ | 24 | 20 | 20 | 23.6 | 23.6 | 21.1 |
| $B_2O_3$ | 3 | 5 | 8 | 4.4 | 4.4 | 6 |
| $WO_3$ | 10 | 17.5 | 5 | 15.7 | 15.7 | 15.9 |
| $Li_2O$ | 16 | 13 | 10 | 10.5 | 13.1 | 13.2 |
| $Na_2O$ | 15 | 9 | 10 | 10 | 7.4 | 7.5 |
| $K_2O$ | 7 | 7 3 | 5 | 2.6 | 2.6 | 2.7 |
| $Nb_2O_5$ | 18 | 17.5 | 20 | 16.5 | 16.5 | 16.7 |
| $TiO_2$ | 5 | | | | | |
| CaO | | 2 | | | | |
| SrO | | | | | | |
| BaO | | 6 | 20 | 16.7 | 16.7 | 16.9 |
| $BaF_2$ | | | | | | |
| ZnO | 2 | 7 | | | | |
| $Al_2O_3$ | | | | | | |
| $Y_2O_3$ | | | 2 | | | |
| Total content | 100 | 100 | 100 | 100 | 100 | 100 |
| $P_2O_5$+$B_2O_3$ | 27 | 25 | 28 | 28 | 28 | 27.1 |
| $Li_2O$+$Na_2O$+$K_2O$ | 38 | 25 | 25 | 23.1 | 23.1 | 23.4 |
| $WO_3$+$Nb_2O_5$+$TiO_2$ | 33 | 35 | 25 | 32.2 | 32.2 | 32.6 |
| Transition temperature(°C) | 452 | 464 | 507 | 511 | 510 | 502 |
| Yield point temperature(°C) | 505 | 513 | 558 | 561 | 556 | 548 |
| Liquid phase temperature(C°) | 880 | 940 | 940 | 880 | 892 | 905 |
| Refractive index(nd) | 1.81522 | 1.84709 | 1.82932 | 1.80963 | 1.81467 | 1.82462 |
| Abbe number($\nu$ d) | 23.45 | 24.25 | 27.4 | 26.56 | 26.44 | 26.1 |
| Viscosity at liquid phase temperature (Pas • s) | 0.9 | 0.3 | 0.3 | 0.6 | 0.5 | 0.4 |
| Density(g/cm$^3$) | 3.44 | 4.11 | 3.87 | 4.11 | 4.12 | 4.16 |
| Density of oxygen atoms($10^{22}$/cm$^3$) | 4.64 | 4.96 | 4.57 | 4.82 | 4.86 | 4.85 |

Table 7

| Glass compositions and characteristics of Examples (mol%) | | | | | | |
|---|---|---|---|---|---|---|
| Component (mol%) | Ex. 37 | Ex. 38 | Ex. 39 | Ex. 40 | Ex. 41 | Ex. 42 |
| $P_2O_5$ | 20.3 | 21 | 18.7 | 18.4 | 18.4 | 18.4 |
| $B_2O_3$ | 4.3 | 4.4 | 7.5 | 6 | 6 | 4.4 |
| $WO_3$ | 15.3 | 15.7 | 16.1 | 15.9 | 15.9 | 15.7 |
| $Li_2O$ | 12.8 | 13.1 | 13.4 | 13.2 | 15.9 | 15.7 |
| $Na_2O$ | 7.2 | 10 | 7.6 | 10.2 | 7.5 | 10 |
| $K_2O$ | 2.6 | 2.6 | 2.7 | 2.7 | 2.7 | 2.6 |
| $Nb_2O_5$ | 16.1 | 16.5 | 16.9 | 16.7 | 16.7 | 16.5 |
| $TiO_2$ | | | | | | |
| CaO | | | | | | |
| SrO | | | | | | |
| BaO | 21.4 | 16.7 | 17.1 | 16.9 | 16.9 | 16.7 |
| $BaF_2$ | | | | | | |
| ZnO | | | | | | |
| $Al_2O_3$ | | | | | | |
| $Y_2O_3$ | | | | | | |
| Total content | 100 | 100 | 100 | 100 | 100 | 100 |
| $P_2O_5+B_2O_3$ | 24.6 | 25.4 | 26.2 | 24.4 | 24.4 | 22.8 |
| $Li_2O+Na_2O+K_2O$ | 22.6 | 25.7 | 23.7 | 26.1 | 26.1 | 28.3 |
| $WO_3+Nb_2O_5+TiO_2$ | 31.4 | 32.2 | 33 | 32.6 | 32.6 | 32.2 |
| Transition temperature(°C ) | 506 | 494 | 495 | 488 | 488 | 476 |
| Yield point temperature(°C) | 551 | 548 | 540 | 530 | 536 | 521 |
| Liquid phase temperature(°C) | 918 | 909 | 927 | 934 | 936 | 950 |
| Refractive index(nd) | 1.82386 | 1.81934 | 1.83378 | 1.82803 | 1.83302 | 1.82707 |
| Abbe number( ν d) | 26.97 | 26.37 | 25.81 | 26.15 | 26.06 | 26.36 |
| Viscosity at liquid phase temperature (Pas • s) | 0.3 | 0.4 | 0.2 | 0.2 | 0.2 | 0.1 |
| Density(g/cm$^3$) | 4.27 | 4.16 | 4.2 | 4.2 | 4.21 | 4.2 |
| Density of oxygen atoms($10^{22}$/cm$^3$) | 4.77 | 4.81 | 4.84 | 4.78 | 4.82 | 4.77 |

Table 8

| Glass compositions and characteristics of Examples (mol%) | | | | | | |
|---|---|---|---|---|---|---|
| Component (mol%) | Ex. 43 | Ex. 44 | Ex. 45 | Exx. 46 | Ex. 47 | Ex.48 |
| $P_2O_5$ | 17.8 | 17.4 | 17 | 18.1 | 17.4 | 19.2 |
| $B_2O_3$ | 4.3 | 4.2 | 4.1 | 5.8 | 4.2 | 7.7 |
| $WO_3$ | 20.4 | 24.9 | 29.1 | 20.6 | 24.9 | 16.5 |
| $Li_2O$ | 15.3 | 14.9 | 14.6 | 12.9 | 12.4 | 13.8 |
| $Na_2O$ | 9.8 | 9.5 | 9.3 | 7.3 | 7 | 10.6 |

Table 8   (continued)

| Glass compositions and characteristics of Examples (mol%) | | | | | | |
|---|---|---|---|---|---|---|
| Component (mol%) | Ex. 43 | Ex. 44 | Ex. 45 | Exx. 46 | Ex. 47 | Ex.48 |
| $K_2O$ | 2.6 | 2.5 | 2.4 | 2.6 | 2.5 | 2.8 |
| $Nb_2O_5$ | 13.5 | 10.7 | 8 | 16.2 | 15.7 | 17.3 |
| $TiO_2$ | | | | | | |
| CaO | | | | | | |
| SrO | | | | | | |
| BaO | 16.3 | 15.9 | 15.5 | 16.5 | 15.9 | 12.1 |
| $BaF_2$ | | | | | | |
| ZnO | | | | | | |
| $Al_2O_3$ | | | | | | |
| $Y_2O_3$ | | | | | | |
| Total content | 100 | 100 | 100 | 100 | 100 | 100 |
| $P_2O_5+B_2O_3$ | 22.1 | 21.6 | 21.1 | 23.9 | 21.6 | 26.9 |
| $Li_2O+Na_2O+K_2O$ | 27.7 | 26.9 | 26.3 | 22.8 | 21.9 | 27.2 |
| $WO_3+Nb_2O_5+TiO_2$ | 33.9 | 35.6 | 37.1 | 36.8 | 40.6 | 33.8 |
| Transition temperature(°C ) | 469 | 461 | 456 | 493 | 495 | 485 |
| Yield point temperature(°C) | 515 | 503 | 495 | 540 | 540 | 529 |
| Liquid phase temperature(°C) | 903 | 865 | 833 | 938 | 928 | 921 |
| Refractive index(nd) | 1.82118 | 1.81597 | 1.81143 | 1.85328 | 1.87201 | 1.82954 |
| Abbe number($\nu$ d) | 26.77 | 27.11 | 27.46 | 24.83 | 23.92 | 25.23 |
| Viscosity at liquid phase temperature (Pas • s) | 0.3 | 0.4 | 0.6 | 0.1 | 0.2 | 0.3 |
| Density(g/cm$^3$) | 4.32 | 4.44 | 4.55 | 4.36 | 4.51 | 4.09 |
| Density of oxygen atoms ($10^{22}$/cm$^3$ | 4.78 | 4.8 | 4.81 | 4.86 | 4.88 | 4.88 |

Table 9

| Glass compositions and characteristics of Examples (mol%) | | | | | | |
|---|---|---|---|---|---|---|
| Component (mol%) | Ex. 49 | Ex. 50 | Ex. 51 | Ex. 52 | Ex. 53 | Ex. 54 |
| $P_2O_5$ | 16.5 | 16.2 | 15.6 | 16.5 | 15.8 | 16.3 |
| $B_2O_3$ | 4 | 3.9 | 3.8 | 2.6 | 1.3 | 1.3 |
| $WO_3$ | 33.2 | 37 | 41.8 | 32.8 | 36.3 | 37.1 |
| $Li_2O$ | 14.2 | 13.9 | 13.5 | 14.1 | 13.6 | 13.9 |
| $Na_2O$ | 9.1 | 8.9 | 8.6 | 9 | 8.7 | 11.2 |
| $K_2O$ | 2.4 | 2.3 | 2.3 | 2.3 | 2.3 | 2.3 |
| $Nb_2O_5$ | 5.4 | 3 | | 7.7 | 7.5 | 7.7 |
| $TiO_2$ | | | | | | |
| CaO | | | | | | |
| SrO | | | | | | |

Table 9   (continued)

| Glass compositions and characteristics of Examples (mol%) | | | | | | |
|---|---|---|---|---|---|---|
| Component (mol%) | Ex. 49 | Ex. 50 | Ex. 51 | Ex. 52 | Ex. 53 | Ex. 54 |
| BaO | 15.2 | 14.8 | 14.4 | 15 | 14.5 | 10.2 |
| $BaF_2$ | | | | | | |
| ZnO | | | | | | |
| $Al_2O_3$ | | | | | | |
| $Y_2O_3$ | | | | | | |
| Total content | 100 | 100 | 100 | 100 | 100 | 100 |
| $P_2O_5+B_2O_3$ | 20.5 | 20.1 | 19.4 | 19.1 | 17.1 | 17.6 |
| $Li_2O+Na_2O+K_2O$ | 25.7 | 25.1 | 24.4 | 25.4 | 24.6 | 27.4 |
| $WO_3+Nb_2O_5+TiO_2$ | 38.6 | 40 | 41.8 | 40.5 | 43.8 | 44.8 |
| Transition temperature(°C ) | 452 | 448 | 445 | 458 | 461 | 454 |
| Yield point temperature(°C) | 491 | 485 | 478 | 499 | 502 | 492 |
| Liquid phase temperature(°C ) | 790 | 747 | 781 | 840 | 863 | 869 |
| Refractive index(nd) | 1.80764 | 1.80397 | 1.79908 | 1.83131 | 1.84927 | 1.84584 |
| Abbe number( ν d) | 27.75 | 27.98 | 28.4 | 26.26 | 25.22 | 24.65 |
| Viscosity at liquid phase temperature (Pas • s) | 1 | 1.2 | 1 | 0.6 | 0.4 | 0.4 |
| Density(g/cm³) | 4.67 | 4.78 | 4.93 | 4.7 | 4.85 | 4.43 |
| Density of oxygen atoms($10^{22}$/cm³) | 4.82 | 4.83 | 4.85 | 4.83 | 4.86 | 4.56 |

Table 10

| Glass compositions and characteristics of Examples (mol%) | | | | | | |
|---|---|---|---|---|---|---|
| Component (mol%) | Ex. 55 | Ex. 56 | Ex. 57 | Ex. 58 | Ex. 59 | Ex. 60 |
| $P_2O_5$ | 15.8 | 23 | 22.8 | 20 | 21.2 | 22.4 |
| $B_2O_3$ | 1.3 | 1.4 | 0.5 | 1.4 | 1.4 | 1.5 |
| $WO_3$ | 31.8 | 15.4 | 15.3 | 20 | 15.4 | 13 |
| $Li_2O$ | 13.6 | 10.2 | 13.1 | 14.1 | 13.7 | 13 |
| $Na_2O$ | 8.7 | 12.4 | 12.3 | 12.1 | 12.4 | 12.5 |
| $K_2O$ | 2.3 | 2.6 | 2.5 | 2.5 | 2.6 | 2.6 |
| $Nb_2O_5$ | 7.5 | 18.8 | 17.4 | 14.1 | 17.1 | 18.6 |
| $TiO_2$ | 4.5 | | 5.1 | 5 | 5.1 | 5.2 |
| CaO | | | | | | |
| SrO | | | | | | |
| BaO | 14.5 | 11.1 | 11 | 10.8 | 11.1 | 11.2 |
| $BaF_2$ | | | | | | |
| ZnO | | 5.1 | | | | |
| $Al_2O_3$ | | | | | | |
| $Y_2O_3$ | | | | | | |

Table 10 (continued)

| Glass compositions and characteristics of Examples (mol%) | | | | | | |
|---|---|---|---|---|---|---|
| Component (mol%) | Ex. 55 | Ex. 56 | Ex. 57 | Ex. 58 | Ex. 59 | Ex. 60 |
| Total content | 100 | 100 | 100 | 100 | 100 | 100 |
| $P_2O_5+B_2O_3$ | 17.1 | 24.4 | 23.3 | 21.4 | 22.6 | 23.9 |
| $Li_2O+Na_2O+K_2O$ | 24.6 | 25.2 | 27.9 | 28.7 | 28.7 | 28.1 |
| $WO_3+Nb_2O_5+TiO_2$ | 43.8 | 34.2 | 37.8 | 39.1 | 37.6 | 36.8 |
| Transition temperature(C°) | 454 | 499 | 511 | 484 | 500 | 510 |
| Yield point temperature(°C) | 492 | 548 | 560 | 529 | 545 | 556 |
| Liquid phase temperature(°C) | 869 | 939 | 919 | 903 | 929 | 935 |
| Refractive index(nd) | 1.84584 | 1.83549 | 1.84497 | 1.8453 | 1.85101 | 1.84733 |
| Abbe number( ν d) | 24.65 | 24.62 | 23.64 | 23.9 | 23.47 | 23.58 |
| Viscosity at liquid phase temperature (Pas • s) | 0.4 | 0.4 | 0.4 | 0.4 | 0.4 | 0.4 |
| Density(g/cm$^3$) | 4.7 | 4.1 | 4.05 | 4.19 | 4.07 | 4 |
| Density of oxygen atoms($10^{22}$/cm$^3$) | 4.84 | 4.83 | 4.86 | 4.85 | 4.85 | 4.86 |

Table 11

| Glass compositions and characteristics of Examples (mol%) | | | | | | |
|---|---|---|---|---|---|---|
| Component (mol%) | Ex. 61 | Ex. 62 | Ex. 63 | Ex. 64 | Ex. 65 | Ex. 66 |
| $P_2O_5$ | 22.7 | 23.6 | 22.5 | 23.3 | 23.8 | 23.7 |
| $B_2O_3$ | 1.5 | 1.5 | 1.4 | 1.4 | 1.5 | 2.5 |
| $WO_3$ | 10.5 | 10.5 | 20 | 20 | 12.3 | 10.7 |
| $Li_2O$ | 13.6 | 11.8 | 17.9 | 16.6 | 20.2 | 11.9 |
| $Na_2O$ | 12.7 | 12.7 | 5.8 | 5.8 | 8.8 | 5.7 |
| $K_2O$ | 2.6 | 2.6 | 2.5 | 2.5 | | 2.5 |
| $Nb_2O_5$ | 19.7 | 20.6 | 14.1 | 14.6 | 19.4 | 17.6 |
| $TiO_2$ | 5.3 | 5.3 | 5 | 5 | 2.6 | 4.9 |
| CaO | | | | | | |
| SrO | | | | | | |
| BaO | 11.4 | 11.4 | 10.8 | 10.8 | 11.4 | 15.6 |
| $BaF_2$ | | | | | | |
| ZnO | | | | | | 4.9 |
| $Al_2O_3$ | | | | | | |
| $Y_2O_3$ | | | | | | |
| Total content | 100 | 100 | 100 | 100 | 100 | 100 |
| $P_2O_5+B_2O_3$ | 24.2 | 25.1 | 23.9 | 24.7 | 25.3 | 26.2 |
| $Li_2O+Na_2+K_2O$ | 28.9 | 27.1 | 26.2 | 24.9 | 29 | 20.1 |
| $WO_3+Nb_2O_5+TiO_2$ | 35.5 | 36.4 | 39.1 | 39.6 | 34.3 | 33.2 |
| Transition temperature(°C ) | 5 12 | 525 | 501 | 507 | 508 | 522 |
| Yield point temperature(°C ) | 558 | 577 | 549 | 564 | 565 | 575 |

Table 11 (continued)

| Glass compositions and characteristics of Examples (mol%) | | | | | | |
|---|---|---|---|---|---|---|
| Component (mol%) | Ex. 61 | Ex. 62 | Ex. 63 | Ex. 64 | Ex. 65 | Ex. 66 |
| Liquid phase temperature(°C ) | 942 | 942 | 898 | 899 | 933 | 923 |
| Refractive index(nd) | 1.84587 | 1.85072 | 1.84893 | 1.8505 | 1.84613 | 1.84407 |
| Abbe number( ν d) | 23.67 | 23.32 | 23.65 | 23.48 | 24.16 | 24.44 |
| Viscosity at liquid phase temperature (Pas • s) | 0.3 | 0.4 | 0.3 | 0.4 | 0.4 | 0.7 |
| Density(g/cm$^3$) | 3.94 | 3.93 | 4.15 | 4.15 | 3.98 | 4.06 |
| Density of oxygen atoms($10^{22}$/cm$^3$) | 4.86 | 4.86 | 4.95 | 4.97 | 4.98 | 4.89 |

Table 12

| Glass compositions and characteristics of Examples (mol%) | | | | | | |
|---|---|---|---|---|---|---|
| Component (mol%) | Ex. 67 | Ex. 68 | Ex. 69 | Ex. 70 | Ex. 71 | Ex. 72 |
| $P_2O_5$ | 23.7 | 24.5 | 24.1 | 24.3 | 24.1 | 24.1 |
| $B_2O_3$ | 2.5 | 2.5 | 1.2 | 1.2 | 1.2 | 1.2 |
| $WO_3$ | 10.7 | 10.7 | 13 | 12.9 | 13 | 13 |
| $Li_2O$ | 12.3 | 11.1 | 12.6 | 12.1 | 12.6 | 14.2 |
| $Na_2O$ | 8.2 | 8.2 | 7.3 | 7.3 | 7.3 | 5.7 |
| $K_2O$ | | | | | | |
| $Nb_2O_5$ | 17.2 | 17.6 | 16.6 | 16.5 | 16.6 | 16.6 |
| $TiO_2$ | 4.9 | 4.9 | 4.9 | 4.8 | 4.9 | 4.9 |
| CaO | | | | | | |
| SrO | | | | | | |
| BaO | 15.6 | 15.6 | 15.4 | 16.1 | 13.8 | 13.8 |
| $BaF_2$ | | | | | | |
| ZnO | 4.9 | 4.9 | 4.9 | 4.8 | 6.5 | 6.5 |
| $Al_2O_3$ | | | | | | |
| $Y_2O_3$ | | | | | | |
| Total content | 100 | 100 | 100 | 100 | 100 | 100 |
| $P_2O_5+B_2O_3$ | 26.2 | 27 | 25.3 | 25.5 | 25.3 | 25.3 |
| $Li_2O+Na_2O+K_2O$ | 20.5 | 19.3 | 19.9 | 19.4 | 19.9 | 19.9 |
| $WO_3+Nb_2O_5+TiO_2$ | 32.8 | 33.2 | 34.5 | 34.2 | 34.5 | 34.5 |
| Transition temperature(°C ) | 518 | 527 | 521 | 524 | 518 | 517 |
| Yield point temperature(°C) | 569 | 575 | 576 | 577 | 570 | 570 |
| Liquid phase temperature(°C) | 915 | 937 | 932 | 935 | 921 | 924 |
| Refractive index(nd) | 1.84373 | 1.84414 | 1.84842 | 1.84835 | 1.85019 | 1.85313 |
| Abbe number( ν d) | 24.6 | 24.43 | 24.28 | 24.42 | 24.06 | 24 |
| Viscosity at liquid phase temperature (Pas • s) | 0.8 | 0.9 | 0.9 | 0.8 | 1 | 1 |
| Density(g/cm$^3$) | 4.07 | 4.06 | 4.13 | 4.06 | 4.07 | 4.13 |

Table 12 (continued)

| Glass compositions and characteristics of Examples (mol%) | | | | | | |
|---|---|---|---|---|---|---|
| Component (mol%) | Ex. 67 | Ex. 68 | Ex. 69 | Ex. 70 | Ex. 71 | Ex. 72 |
| Density of oxygen atoms($10^{22}$ /$cm^3$ ) | 4.93 | 4.94 | 4.94 | 4.84 | 4.9 | 4.99 |

Table 13

| Glass compositions and characteristics of Examples (mol%) | | | | | | |
|---|---|---|---|---|---|---|
| Component (mol%) | Ex. 73 | Ex. 74 | Ex. 75 | Ex. 76 | Ex. 77 | Ex. 78 |
| $P_2O_5$ | 24.1 | 24.2 | 24.2 | 17.4 | 22.6 | 24 |
| $B_2O_3$ | 1.2 | 1.2 | 1.2 | 4.2 | 3.8 | 3 |
| $WO_3$ | 13 | 13 | 13 | 18.6 | 34.8 | 8 |
| $Li_2O$ | 12.6 | 12.6 | 12.6 | 12.4 | 13.5 | 22 |
| $Na_2O$ | 7.3 | 7.3 | 7.3 | 7 | 8.6 | 11 |
| $K_2O$ | | | | 2.5 | 2.3 | 2 |
| $Nb_2O_5$ | 16.6 | 16.6 | 16.6 | 22 | | 18 |
| $TiO_2$ | 4.9 | 4.9 | 4.9 | | | 6 |
| CaO | | | | | | |
| SrO | | | | | | |
| BaO | 12.2 | 10.5 | 8.9 | 15.9 | 14.4 | 3 |
| $BaF_2$ | | | | | | |
| ZnO | 8.1 | 9.7 | 11.3 | | | 3 |
| $Al_2O_3$ | | | | | | |
| $Y_2O_3$ | | | | | | |
| Total content | 100 | 100 | 100 | 100 | 100 | 100 |
| $P_2O_5+B_2O_3$ | 25.3 | 25.4 | 25.4 | 21.6 | 19.4 | 27 |
| $Li_2O+Na_2O+K_2O$ | 19.9 | 19.9 | 19.9 | 21.9 | 24.4 | 35 |
| $WO_3+Nb_2O_5+TiO_2$ | 34.5 | 34.5 | 34.5 | 40.6 | 34.8 | 32 |
| Transition temperature(°C ) | 513 | 511 | 506 | 5 27 | 471 | 467 |
| Yield point temperature(°C) | 566 | 564 | 558 | 575 | 505 | 513 |
| Liquid phase temperature(°C ) | 925 | 925 | 920 | 960 | 750 | 900 |
| Refractive index(nd) | 1.85202 | 1.85349 | 1.85508 | 1.905 | 1.735 | 1.82121 |
| Abbe number( ν d) | 23.85 | 23.64 | 23.4 | 22.72 | 308 | 24 |
| Viscosity at liquid phase temperature (Pas • s) | 0.9 | 0.9 | 0.9 | 2.5 | 2.6 | 4.7 |
| Density(g/$cm^3$) | 4.15 | 4.07 | 4.06 | 4.023 | 4.01 | 3.602 |
| Density of oxygen atoms($10^{22}$/$cm^3$) | 5.04 | 4.99 | 5.02 | 4.75 | 4.71 | 4.95 |

Table 14

| Glass compositions and characteristics of Examples (mol%) | | | | | |
|---|---|---|---|---|---|
| Component (mol%) | Ex. 79 | Ex. 80 | Ex. 81 | Ex. 82 | Ex. 83 |
| $P_2O_5$ | 24 | 23 | 24 | 23.9 | 24 |

Table 14   (continued)

| Glass compositions and characteristics of Examples (mol%) | | | | | |
|---|---|---|---|---|---|
| Component (mol%) | Ex. 79 | Ex. 80 | Ex. 81 | Ex. 82 | Ex. 83 |
| $B_2O_3$ | 5 | 5 | 5 | 4 | 4 |
| $WO_3$ | 5 | 7 | 5 | 5 | 4 |
| $Li_2O$ | 20 | 18 | 21 | 17.9 | 17 |
| $Na_2O$ | 11 | 14 | 13 | 13.9 | 15 |
| $K_2O$ | 2 | 2 | 2 | 2 | 2 |
| $Nb_2O_5$ | 21 | 19 | 21 | 22.4 | 23 |
| $TiO_2$ | 5 | 6 | 5 | 5 | 5 |
| CaO | | | | | |
| SrO | | | | | |
| BaO | 6 | 4 | 3 | 5 | 5 |
| $BaF_2$ | | | | | |
| ZnO | 1 | 2 | 1 | 1 | 1 |
| $Al_2O_3$ | | | | | |
| $Y_2O_3$ | | | | | |
| Total content | 100 | 100 | 100 | 100.1 | 100 |
| $P_2O_5+B_2O_3$ | 29 | 28 | 29 | 27.9 | 28 |
| $Li_2O+Na_2O+K_2O$ | 33 | 34 | 36 | 33.8 | 34 |
| $WO_3+Nb_2O_5+TiO_2$ | 31 | 32 | 31 | 32.4 | 32 |
| Transition temperature(°C ) | 482 | 471 | 478 | 484 | 490 |
| Yield point temperature(°C) | 532 | 520 | 526 | 535 | 540 |
| Liquid phase temperature(°C ) | 920 | 620 | 930 | 930 | 930 |
| Refractive index(nd) | 1.8283 | 1.82255 | 1.82291 | 1.8372 | 1.83635 |
| Abbe number( ν d) | 24.01 | 23.93 | 23.86 | 23.41 | 23.42 |
| Viscosity at liquid phase temperature (Pas • s) | 5.2 | | 4.6 | 5.2 | |
| Density(g/cm$^3$) | 3.617 | 3.63 | 3.545 | 3.631 | 3.61 |
| Density of oxygen atoms($10^{22}$/cm$^3$) | 4.97 | 4.96 | 4.99 | 4.95 | 4.94 |

Table 15

| | $\lambda_{80}$(nm) | $\lambda_5$(nm) |
|---|---|---|
| Ex.78 | 375 | 470 |
| Ex.79 | 371 | 475 |
| Ex.80 | 371 | 478 |
| Ex.81 | 371 | 487 |
| Ex.82 | 371 | 490 |
| Ex.83 | 371 | 488 |

(1) Refractive index [nd] and Abbé number [ν d]

These were measured for optical glass obtained at a gradual cooling temperature reduction rate of -30°C/h.

(2) Transition temperature [Tg] and yield point temperature [Ts]

These were measured at a rate of temperature rise of 4°C/min with a thermomechanical analyzer from Rigaku Denki K.K.

(3) Liquid phase temperature (LT)

The optical glass was kept in a loss of transparency test furnace with a 400-1,100°C temperature gradient for 1 hour, the presence or absence of crystals was observed with a microscope at 80-fold magnification, and the liquid phase temperature was measured.

(4) Viscosity at liquid phase temperature

The viscosity at the liquid phase temperature was measured by the rotating cylinder (Margules) method (Sho Naruse "Glass Engineering" (Kyoritsu Shuppan).

Comparative Examples 1-3

Comparative Examples 1-3 are Example 9 described in Japanese Patent Unexamined Publication No. Sho 55-37500, Example 4 described in Japanese Patent Unexamined Publication No. Sho 56-40094, and Example 1 described in Japanese Patent Unexamined Publication No. Hei 5-51233. These glasses are given as comparative examples. The characteristics of these glasses were measured in the same manner as for Examples. The results are given in Table 16.

Table 16

| Glass compositions and characteristics of Comparative Examples | | | |
|---|---|---|---|
| Component (wt%) | Comp. Ex. 1 | Comp. Ex, 2 | Comp. Ex. 3 |
| $P_2O_5$ | 25.88 | 34.00 | $GeO_2$=7.0 |
| $B_2O_3$ | 7.26 | | 5.00 |
| $Al_2O_3$ | MgO=0.77 | | $SiO_2$=12.0 |
| $Li_2O$ | CaO= 1.18 | | 1.30 |
| $Na_2O$ | PbO= 15.55 | | 10.70 |
| $K_2O$ | 8.29 | | 7.50 |
| $SrO_2$ | 0.42 | | $Cs_2O$=8.5 |
| BaO | 1.60 | | 3.30 |
| $BaF_2$ | | | |
| ZnO | 0.31 | 43.00 | |
| $Y_2O_3$ | | | |
| $TiO_2$ | | | 25.70 |
| $Nb_2O_5$ | 38.74 | 23.00 | 19.00 |
| $WO_3$ | | | |
| Total content | | | |
| $Li_2O$+$Na_2O$+$K_2O$ | | | |
| | | | |
| Transition temperature(°C) | | | |

Table 16   (continued)

| Glass compositions and characteristics of Comparative Examples | | | |
|---|---|---|---|
| Component (wt%) | Comp. Ex. 1 | Comp. Ex, 2 | Comp. Ex. 3 |
| Yield point temperature(°C) | 617 | 583 | 520 |
| Liquid phase temperature(°C) | 1020 | 1100 | 1050 |
| Refractive index(nd) | 1.78750 | 1.75550 | 1.80550 |
| Abbe number( ν d) | 26.70 | 33.40 | 25.20 |
| | S55-37500 | S56-40094 | H5-51233 |
| Viscosity at liquid phase temperature(Pas • s) | | | |

From the above-stated results, it was confirmed that the glasses of Examples all had refractive indexes [nd] of 1.75-2.00 and an Abbé number [ ν d] of 20-28.5. All of the glasses were also confirmed to have a transition temperature [Tg] of not more than 530°C, a yield point temperature [Ts] of not more than 580°C, a liquid phase temperature [L.T.] of not more than 970°C, to be suited to precision pressing, and to have good resistance to loss of transparency. (Some of the glasses had a viscosity at the liquid phase temperature of 0.4 Pa • s or greater.)

By contrast, the glasses of the comparative examples had high liquid phase temperatures [L.T.] of 1,000°C or more. Comparative Examples 1 and 2 had a yield point temperature [Ts] of greater than 580°C and were not suited to mass production.

Example 84

The press device shown in Fig. 1 was used to obtain aspherical lenses by aspherical precision pressing the glasses obtained in Examples 1-83. The glasses of the examples in the form of sphere of about 2-20 mm in diameter were positioned between . lower mold 2 and upper mold 1, a nitrogen atmosphere was provided within quartz tube 11, and electricity was supplied to heater 12 to heat the interior of quartz tube 11. The temperature within the casting mold was adjusted to a temperature at which the viscosity of the glass glob being molded was about 10.8 Pa • s, and while maintaining this temperature, pressure rod 13 was dropped to press against upper mold 1, thereby pressing the glass glob being molded within the casting mold. The pressure applied was 8 MPa and the duration of press was 30 sec. After pressing, the pressing pressure was removed, the molded glass body that had been subjected to aspherical press molding was cooled to the transition temperature while still in contact with lower mold 2 and upper mold 1, the molded product was rapidly cooled to about room temperature, and the aspherically molded glass was recovered from the casting mold. The aspherical lenses obtained were extremely high precision lenses.

Example 85

In the same manner as in Examples 1-83, glass was melted, clarified, stirred, and caused to flow out through a platinum alloy flowout pipe. The above-described drop cut method was employed to obtain spherical precision press molding materials (preforms) 4 that were 2-30 mm in diameter. The 83 types of preform 4 that were obtained by this method were comprised of the optical glasses obtained in Examples 1-83. Aspherical lenses were obtained from these preforms 4 using the press device shown in Fig. 1 by aspherical precision press molding as described further below.

First, a spherical preform 4 of 2-30 mm in diameter was positioned between lower mold 2 and upper mold 1, a nitrogen atmosphere was provided within quartz tube 11, and electricity was supplied to heater 12 to heat the interior of quartz tube 11. The temperature within the casting mold was set to a temperature 20-60°C higher than the yield point temperature of the glass (the temperature at which the viscosity of the glass reached $10^{7-6}$ poise), and while maintaining this temperature, pressure rod 13 was dropped to press against upper mold 1, thereby pressing preform 4 within the casting mold. The pressure applied was 8 MPa and the pressing time was 30 sec. Subsequently, the pressing pressure was removed, the press-molded glass product was cooled to a temperature 30°C lower than the transition temperature of the glass while still in contact with lower mold 2 and upper mold 1, the molded product was rapidly cooled to about room temperature, and the aspherical lens was recovered from the casting mold. The 83 types of aspherical lenses obtained were all of high precision and had the optical constants recorded in Tables 1-14.

**Industrial Applicability**

Based on the present invention, a low-melting-point optical glass can be provided that has a high refractive index and high dispersion characteristics, a glass transition temperature of not more than 530°C, a yield point temperature of not more than 580°C, a liquid phase temperature of not more than 970°C, resistance to loss of transparency, and good molding properties. Further, the use of the optical glass of the present invention permits the extension of the service life of the mold material employed in precision pressing and permits stable precision pressing. Further, precision pressing of the low-melting-point optical glass of the present invention makes it possible to obtain optical products such as aspherical lenses. The glass of the present invention may also be employed as common optical glass. As described above, the optical glass for precision press molding of the present invention is highly useful in industry.

Based on the present invention, optical glass having a high refractive index and high dispersion characteristics that is suited to precision press molding, and a precision press molding material comprised of this glass, can be provided. Specifically, the optical glass of the present invention has a glass transition temperature Tg of not more than 530°C and/or a yield point temperature Ts of not more than 580°C, and the liquid phase temperature of not more than 970°C, making it possible to achieve characteristics excellent in resistance to loss of transparency. Thus, not only the optical glass is suited to precision press molding, but also molten glass can be made to drip from a flowout pipe to manufacture precision press molding materials stably and well.

Further, based on the present invention, the use of the above-described optical glass extends the service life of the mold employed in precision press molding, stable precision press molding can be conducted, and in particular, this optical glass is suited to the manufacturing of optical parts such as aspherical lenses.

**Claims**

1. An optical glass, **characterized by** exhibiting a refractive index in the range of 1.75 to 2.0, an Abbé number [ν d] in the range of 20 to 28.5, and a viscosity at the liquid phase temperature equal to or higher than 0.4 Pa • s.

2. An optical glass, **characterized by** exhibiting a refractive index in the range of 1.75 to 2.0, an Abbé number [ ν d] in the range of 20 to 28.5, and a glass transition temperature equal to or less than 540°C.

3. An optical glass, **characterized by** exhibiting a refractive index in the range of 1.75 to 2.0, an Abbé number [ ν d] in the range of 20 to 28.5, and a transmittance λ 80 equal to or less than 500nm and a transmittance λ 5 equal to or less than 385nm.

4. The optical glass according to any of claims 1-3 comprising, as molar percents, 12-34 percent of $P_2O_5$; 0.2-15 percent of $B_2O_3$; 0-25 percent of $Nb_2O_5$; 0-40 percent of $WO_3$; 4-45 percent of at least one $R'_2O$ selected from among $Li_2O$, $Na_2O$, and $K_2O$; and 0-30 percent (excluding 30 percent) of at least one RO selected from among BaO, ZnO, and SrO; with the total content of the above-stated components being equal to or more than 94 percent.

5. The optical glass according to any of claims 1-3, characterize by comprising as glass components, as molar percents, 12-34 percent of $P_2O_5$; 0.2-15 percent of $B_2O_3$ (where the total quantity of $P_2O_5$ and $B_2O_3$ is 15-35 percent); 0-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-25 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$(where the total quantity of $Li_2O$, $Na_2O$, and $K_2O$ is 10-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent.

6. An optical glass according to any of claims 1-5 comprising, as molar percents, 15-30 percent of $P_2O_5$; 0.5-15 percent of $B_2O_3$; 5-25 percent of $Nb_2O_5$; 6-40 percent of $WO_3$; 4-45 percent of at least one $R'_2O$ selected from among $Li_2O$, $Na_2O$, and $K_2O$; and 0-30 molar percent (excluding 30 molar percent) of at least one RO selected from among BaO, ZnO, and SrO; with the total content of the above-stated components being equal to or more than 95 percent.

7. An optical glass, **characterized by** comprising, as molar percents, 15-30 percent of $P_2O_5$; 0.5-15 percent of $B_2O_3$; 5-25 percent of $Nb_2O_5$; 6-40 percent of $WO_3$; 4-45 percent of at least one $R'_2O$ selected from among $Li_2O$, $Na_2O$, and $K_2O$; and 0-30 molar percent (excluding 30 molar percent) of at least one RO selected from among BaO, ZnO, and SrO; with the total content of the above-stated components being equal to or more than 95 percent.

8. The optical glass according to claim 6 or 7 comprising 0-25 molar percent (excluding 0 molar percent) of BaO.

9. An optical glass, characterize by comprising, as molar percents, 15-30 percent of $P_2O_5$; 0.5-15 percent of $B_2O_3$; 5-25 percent of $Nb_2O_5$; 6-40 percent of $WO_3$; not more than 10 percent of $TiO_2$; 4-45 percent of at least one $R'_2O$ selected from among $Li_2O$, $Na_2O$, and $K_2O$; and 0-30 percent (excluding 30 percent) of at least one RO selected from among BaO, ZnO, and SrO.

10. An optical glass, **characterized by** comprising as glass components, as molar percents, 12-34 percent of $P_2O_5$; 0.2-15 percent of $B_2O_3$ (where the total quantity of $P_2O_5$ and $B_2O_3$ is 15-35 percent); 0-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-25 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where the total quantity of $Li_2O$, $Na_2O$, and $K_2O$ is 10-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent; a density of oxygen atoms contained is in the range of $4.2 \times 10^{22}$ to $5.2 \times 10^{22}/cm^3$.

11. An optical glass, **characterized by** comprising as glass components, as molar percents, 12-34 percent of $P_2O_5$; 0.2-15 percent of $B_2O_3$ (where the total quantity of $P_2O_5$ and $B_2O_3$ is 15-35 percent); 2-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-25 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where the total quantity of $Li_2O$, $Na_2O$, and $K_2O$ is 29-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent.

12. An optical glass, **characterized by** comprising as glass components, as molar percents, 12-34 percent of $P_2O_5$; 0.2-15 percent of $B_2O_3$ (where the total quantity of $P_2O_5$ and $B_2O_3$ is 15-35 percent); 2-45 percent of $WO_3$; 0-25 percent of $Nb_2O_5$; 0 to 10 percent of $TiO_2$ (where the total quantity of $WO_3$, $Nb_2O_5$, and $TiO_2$ is 20-45 percent); 0-11 percent of BaO; 0-20 percent of ZnO (where the total quantity of BaO and ZnO is less than 30 percent); 2-30 percent of $Li_2O$; 2-30 percent of $Na_2O$; 0-15 percent of $K_2O$ (where the total quantity of $Li_2O$, $Na_2O$, and $K_2O$ is 10-45 percent); 0-10 percent of CaO; 0-10 percent of SrO; 0-5 percent of $Al_2O_3$; 0-5 percent of $Y_2O_3$; 0-1 percent of $Sb_2O_3$; and 0-1 percent of $As_2O_3$; where the total quantity of all of the above-listed components is equal to or more than 94 percent.

13. The optical glass according to any of claims 10-12, **characterized by** having a composition comprising, as essential components, $P_2O_5$, $B_2O_3$, $WO_3$, $Nb_2O_5$, $TiO_2$, BaO, ZnO, $Li_2O$, $Na_2O$ and $K_2O$ or the composition comprising the above essential components and $Sb_2O_3$.

14. The optical glass according to claim 10 or 11 comprising 0-11 percent of BaO.

15. The optical glass according to claim 10 or 12, wherein the total quantity of $Li_2O$, $Na_2O$, and $K_2O$ is equal to or more than 29 percent.

16. The optical glass according to any of claims 10-15, **characterized by** having a density of oxygen atoms contained in the range of from $4.2 \times 10^{22}$ to $5.2 \times 10^{22}/cm^3$.

17. An optical, **characterized by** comprising $P_2O_5$, $B_2O_3$, $WO_3$ and an alkali metal oxide, wherein the total quantity of $P_2O_5$ and $B_2O_3$ is 15-35 molar percent and a content of $WO_3$ is 2-45 molar percent and a density of oxygen atoms contained ranges from $4.2 \times 10^{22}$ to $5.2 \times 10^{22}/cm^3$.

18. The optical glass according to claim 17 comprising 2-30 molar percent of $Li_2O$.

19. The optical glass according to any of claims 10-18 not substantially comprising $GeO_2$.

20. The optical glass according to any of claims 10-19, **characterized by** exhibiting a glass transition temperature equal to or less than 530°C and/or a yield point temperature equal to or less than 580°C.

21. The optical glass according to any of claims 10-20, **characterized by** exhibiting a refractive index in the range of 1.7 to 2.0, an Abbé number ν d in the range of 20 to 32.

**22.** The optical glass according to any of claims 10-21, **characterized by** exhibiting a liquid phase temperature equal to or less than 970°C.

**23.** An optical part composed of the optical glass according to any of claims 1-22.

**24.** A glass preform composed of the optical glass according to any of claims 1-22.

**25.** A method of manufacturing glass performs, **characterized in that** a prescribed weight of molten glass flowing out of a flowout pipe is received in a mold to prepare a glass preform made of the optical glass according to any of claims 12-24.

**26.** A method of manufacturing glass preforms using the optical glass according to of any of claims 1-22, **characterized in that**:

a molten glass glob is made to fall by causing molten glass flowing out of a flowout pipe to drip naturally or by cutting with a cutting blade;
the molten glass glob is received in a depression in a forming mold, and in the process, air, an inert gas or some other gas is blown out through minute holes opening at the depressions; and,
a layer of air is generated between the molten glass glob and the inner surface of depression in the forming mold and the molten glass glob is maintained and cooled within the depression in a state of substantial non-contact with the inner surface of the depression until at least a portion of the outer surface of the molten glass glob reaches a temperature not greater than the melting temperature.

**27.** A method of manufacturing glass molding products, **characterized in that** the glass molding products are formed by heating and precision press-molding the precision press-molding material according to claim 24 or the glass preform manufactured by the manufacturing method according to claim 25.

Fig. 1

F i g. 2

Transmittance (%) vs Wavelength (nm)

$\lambda_5 = 375 \text{ nm}$

$\lambda_{80} = 470 \text{ nm}$

## INTERNATIONAL SEARCH REPORT

| | International application No. |
|---|---|
| | PCT/JP01/05627 |

**A. CLASSIFICATION OF SUBJECT MATTER**
Int.Cl⁷   C03C3/21, C03C3/19

According to International Patent Classification (IPC) or to both national classification and IPC

**B. FIELDS SEARCHED**

Minimum documentation searched (classification system followed by classification symbols)
Int.Cl⁷   C03C1/00-14/00

Documentation searched other than minimum documentation to the extent that such documents are included in the fields searched
Jitsuyo Shinan Koho       1926-1996       Toroku Jitsuyo Shinan Koho  1994-2001
Kokai Jitsuyo Shinan Koho  1971-2001       Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 08-157231 A (Hoya Corporation), 18 June, 1996 (18.06.96), Claims; Par. Nos. [0003], [0004]; working example (Family: none) | 1-27 |
| X | JP 07-097234 A (Hoya Corporation), 11 April, 1995 (11.04.95), Claims; working example   (Family: none) | 1-27 |
| X | JP 07-247135 A (Hoya Corporation), 26 September, 1995 (26.09.95), Claims 5 to 7; working example   (Family: none) | 1-3,23-27 |
| X | JP 07-247136 A (Hoya Corporation), 26 September, 1995 (26.09.95), Claims; working example   (Family: none) | 1-4,17-27 |
| A | JP 2000-016830 A (Hoya Corporation), 18 January, 2000 (18.01.00), Par. Nos. [0003] to [0004], [0053] to [0059] & DE 19919802 A1 | 20,25-27 |

☒  Further documents are listed in the continuation of Box C.      ☐   See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 17 September, 2001 (17.09.01) | 25 September, 2001 (25.09.01) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP01/05627 |

C (Continuation).    DOCUMENTS CONSIDERED TO BE RELEVANT

| Category* | Citation of document, with indication, where appropriate, of the relevant passages | Relevant to claim No. |
|---|---|---|
| PX | JP 2001-058845 A (Kabushiki Kaisha Sumita Kogaku Glass), 06 March, 2001 (06.03.01), working examples 7, 8, 11 to 13   (Family: none) | 1-8,10-12, 14-27 |

Form PCT/ISA/210 (continuation of second sheet) (July 1992)

34